# EUROPEAN PATENT SPECIFICATION

(11) **EP 2 338 322 B1**
(45) Date of publication and mention of the grant of the patent: **29.05.2013**
(21) Application number: 10194761.2
(22) Date of filing: 13.12.2010
(51) Int. Cl.: A01B 69/00

(54) **Apparatus, computer program and method for controlling an agricultural implement**
Vorrichtung, Computerprogramm und Verfahren zur Steuerung einer Landmaschine
Appareil, programme informatique et procédé pour le contrôle d'un outil agricole

(30) Priority: 23.12.2009 US 645747
(43) Date of publication of application: 29.06.2011
(73) Proprietor: DEERE & COMPANY, Moline, Illinois 61265-8098 (US)
(72) Inventor: Anderson, Noel W., Fargo, ND 58102 (US)
(74) Representative: John Deere GmbH & Co. KG

(56) References cited:
- EP-A1- 1 369 017
- GB-A- 2 382 157
- US-A- 5 572 856
- US-A- 6 101 795
- US-A1- 2004 136 139

## Description

The present invention relates generally to area management, and in particular to a method, computer program product, and apparatus for managing an area. Still more particularly, the present disclosure relates to a method, computer program product, and apparatus for reducing an inconsistency in an area.

Inconsistencies may develop in an area. The inconsistencies may create unfavorable conditions in at least a portion of the area. A number of physical tasks may be performed to reduce the inconsistency. The use of robotic devices to perform physical tasks has increased in recent years. Mobile robotic devices can be used to perform a variety of different tasks. These mobile devices may operate in semi-autonomous or fully autonomous modes. One physical task performed by a mobile robotic vehicle is cutting grass within an area.

A such device is known from EP1369017A1. It comprises a mobile platform configured to move through an area management environment; a camera system associated with the mobile platform, wherein the camera system is configured to create image information; wherein a distribution system associated with the mobile platform, wherein the distribution system is configured to distribute a resource; and a processor unit associated with the mobile platform, wherein the processor unit is configured to run an area management process to receive the image information from the camera system, identify a number of inconsistencies in a number of portions of the area using the image information, and control a distribution of the resource by the distribution system in the number of portions of the area in which an inconsistency in the number of inconsistencies is identified.

It is therefore an object of the present invention to provide an apparatus, computer program or method respectively to enabling respective operation.

This object is met according to the invention by the teaching of claim 1, 15 or 16 respectively, while features developing the solution in an advantageous way are set forth in the further claims.

The different illustrative embodiments provide an apparatus comprising a mobile platform, a camera system, a distribution system, and a processor unit. The mobile platform is configured to move through an area. The camera system is associated with the mobile platform, and the camera system is configured to create image information. The distribution system is associated with the mobile platform and configured to distribute a resource. The processor unit is associated with the mobile platform and configured to run an area management process to receive the image information from the camera system, identify a number of inconsistencies in a number of portions of the area using the image information, and control a distribution of the resource by the distribution system in the number of portions of the area in which an inconsistency in the number of inconsistencies is identified.

The different illustrative embodiments also provide an apparatus comprising a mobile platform, a camera system, a cutting system, and a processor unit. The mobile platform is configured to move through an area. The camera system is associated with the mobile platform, and the camera system is configured to create image information. The cutting system is associated with the mobile platform and configured to trim a number of shrubs by cutting the number of shrubs. The processor unit is associated with the mobile platform and configured to run an area management process to receive the image information from the camera system, identify a number of shrubs in the area using the image information, and cause the cutting system to trim the number of shrubs in a number of portions of the area in which the number of shrubs are identified.

Such apparatus may comprise a mobile platform configured to move through the area; a camera system associated with the mobile platform, wherein the camera system is configured to create image information; a cutting system associated with the mobile platform and configured to trim a number of shrubs by cutting the number of shrubs; and a processor unit associated with the mobile platform and configured to run an area management process to receive the image information from the camera system, identify a number of shrubs in the area using the image information, and cause the cutting system to trim the number of shrubs in a number of portions of the area in which the number of shrubs are identified.

The number of portions may be a first number of portions, and further comprises a distribution system associated with the mobile platform configured to distribute a resource, wherein the processor unit is further configured to run the area management process to identify a number of inconsistencies in the area using the image information, and control a distribution of the resource by the distribution system in a second number of portions of the area in which an inconsistency in the number of inconsistencies is identified.

The distribution of the resource may reduce the inconsistency in the number of portions.

The mobile platform may comprise a number of wheels and a propulsion system, and wherein the area management process causes the propulsion system to propel the mobile platform through the area.

The inconsistency is a number of weeds and the resource is a weed remover.

The apparatus may further comprise a grade sensor associated with the mobile platform, wherein the grade sensor is configured to identify a change in elevation, and wherein the inconsistency is the change in elevation that falls outside of a threshold for the change in elevation for the area.

The processor unit may be configured to run the area management process to control the distribution of the resource by the distribution system further comprises the processor unit being configured to run the area management process to alter the change in elevation to meet the specification for the area using the distribution system.

The resource may be a soil.

The resource may be seed and the inconsistency is a level of growth of a plant that does not meet a specified growth level for the plant for the area.

The inconsistency may be a marked area and the resource is seed, and further comprise a tiller system, wherein the processing unit is further configured to run the area management process to operate the tiller system in the marked area.

The marked area may be at least partially bound with a border.

The apparatus may further comprise a digging system associated with the mobile platform configured to move a material;

The area management process may cause the digging system to dig in a designated portion of the area.

The area management process may cause the distribution system to distribute an edging material in the designated portion after causing the digging system to dig in the designated portion.

The area management process causes the distribution system to distribute an adhesive onto the edging material, after causing the distribution system to distribute the edging material, wherein the adhesive causes a first portion of the edging material to bond to a second portion of the edging material.

The different illustrative embodiments also provide an apparatus comprising a mobile platform, a camera system, a tiller system, and a processor unit. The mobile platform is configured to move through the area. The camera system is associated with the mobile platform, and the camera system is configured to create image information. The tiller system is associated with the mobile platform configured to turn a soil. The processor unit is associated with the mobile platform and configured to run an area management process to receive the image information from the camera system, identify a marked area using the image information, and cause the tiller system to turn the soil in the marked area within the area.

Such apparatus may comprise a mobile platform configured to move through the area; a camera system associated with the mobile platform, wherein the camera system is configured to create image information; a tiller system associated with the mobile platform configured to turn a soil; and a processor unit associated with the mobile platform and configured to run an area management process to receive the image information from the camera system, identify a marked area using the image information, and cause the tiller system to turn the soil in the marked area within the area.

The marked area is at least partially bound with a border.

The border may comprises a hose.

The processor unit nay be configured to run the area management process to operate the tiller system in the marked area prior to distributing the seed.

The apparatus may further comprise a distribution system associated with the mobile platform configured to distribute a resource, wherein the processor unit is further configured to run the area management process to identify a number of inconsistencies in the area using the image information, and control a distribution of the resource by the distribution system in a number of portions of the area in which an inconsistency in the number of inconsistencies is identified. The distribution of the resource may reduce the inconsistency in the number of portions.

The apparatus may further comprise a cutting system associated with the mobile platform configured to trim a number of shrubs by cutting the number of shrubs.

The processor unit nay further be configured to run the area management process to identify a number of shrubs in the area using the image information, and cause the cutting system to trim the number of shrubs in a number of portions of the area in which the number of shrubs are identified.

The apparatus may further comprise a digging system associated with the mobile platform configured to move a material;

The area management process may cause the digging system to dig in a designated portion of the area.

The area management process causes the distribution system to distribute an edging material in the designated portion after causing the digging system to dig in the designated portion.

The different illustrative embodiments also provide a computer program product. The computer program product comprises a computer readable storage medium. The computer program product also comprises program code, stored on the computer readable storage medium, for generating image information using a camera system associated with a mobile platform. The computer program product also comprises program code, stored on the computer readable storage medium, for determining whether a number of inconsistencies is present in the area using the image information. The computer program product also comprises program code, stored on the computer readable storage medium, for causing a distribution system to distribute a resource in a number of portions of the area in which an inconsistency in the number of inconsistencies is identified responsive to the number of inconsistencies being present in the area.

The different illustrative embodiments also provide a method for managing an area. Image information is generated using a camera system associated with a mobile platform. A determination is made whether a number of inconsistencies is present in the area using the image information. Responsive to the number of inconsistencies being present in the area, a resource is distributed in a number of portions of the area in which an inconsistency in the number of inconsistencies is identified.

The features, functions, and advantages can be achieved independently in various embodiments of the present invention or may be combined in yet other embodiments in which further details can be seen with reference to the following description and drawings.

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present invention when read in conjunction with the accompanying drawings, wherein:
- Figure 1: is an illustration of an area management environment in which illustrative embodiments may be implemented;
- Figure 2: is a block diagram of an area management environment in accordance with an illustrative embodiment;
- Figure 3: is a block diagram of a data processing system in accordance with an illustrative embodiment;
- Figure 4: is a block diagram of a mobility system in accordance with an illustrative embodiment;
- Figure 5: is a block diagram of an inconsistency in accordance with an illustrative embodiment;
- Figure 6: is a block diagram of a resource in accordance with an illustrative embodiment;
- Figure 7: is an illustration of an area management vehicle reducing a number of weeds in accordance with an illustrative embodiment;
- Figure 8: is an illustration of an area management vehicle trimming a number of shrubs in accordance with an illustrative embodiment;

- Figure 9: is an illustration of an area management vehicle distributing an edging material in accordance with an illustrative embodiment;
- Figure 10: is a flowchart of a process for managing an area in accordance with an illustrative embodiment;
- Figure 11: is a flowchart of a process for distributing a resource in accordance with an illustrative embodiment;
- Figure 12: is a flowchart of a process for trimming a number of shrubs in accordance with an illustrative embodiment;
- Figure 13: is a flowchart of a process for altering a change in elevation in accordance with an illustrative embodiment;
- Figure 14: is a flowchart of a process for digging in a designated portion of an area in accordance with an illustrative embodiment;
- Figure 15: is a flowchart of a process for tilling in a marked area in accordance with an illustrative embodiment; and
- Figure 16: is a flowchart of a process for tilling in a marked area depicted in accordance with an illustrative embodiment.

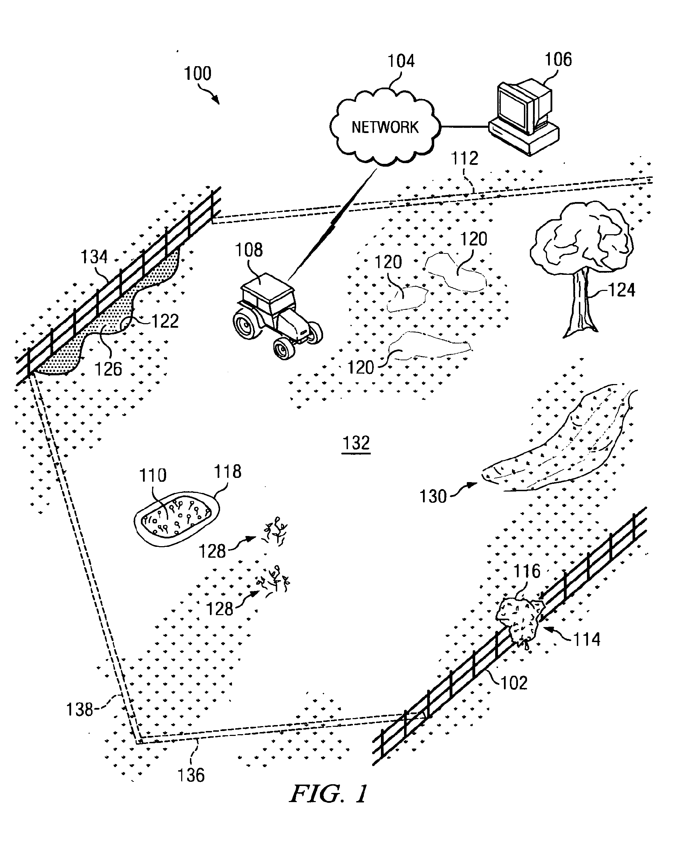

With reference to the figures and in particular with reference to Figure 1, a block diagram of a worksite environment is depicted in which an illustrative embodiment may be implemented. Area management environment 100 may be any type of area in which an autonomous vehicle can operate. In an illustrative example, area management environment 100 may be a structure, building, worksite, area, yard, golf course, indoor environment, outdoor environment, different area, and/or any other suitable area management environment or combination of area management environments.

In this example, area management environment 100 includes lawn 132. Lawn 132 contains a number of inconsistencies. Insufficient growth areas 120, change in elevation 130, undesired plant growth areas 128, and shrub growth 116 from shrub 114 are inconsistencies in lawn 132. Lawn 132 also contains tree 124, boundary 102, boundary 134, boundary 112, boundary 136, boundary 138, marked area 126, border 122 of marked area 126, flower bed 110 and designated area 118. Area management vehicle or mobile platform 108 is a robotic vehicle that travels through lawn 132. Area management vehicle 108 detects and reduces the degree and/or number of inconsistencies in lawn 132. Area management vehicle 108 may operate in semi-autonomous or fully autonomous modes. A number, when referring to items means, one or more items. For example, a number of inconsistencies is one or more inconsistencies.

Area management vehicle 108 operates within the portion of lawn 132 defined by boundary 102, boundary 134, boundary 112, boundary 136, and boundary 138. Boundary 134 and boundary 102 are a physical border. In this illustrative embodiment, boundary 134 and boundary 102 are portions of a fence. Area management vehicle 108 detects the location of boundary 134 and boundary 102 using image information obtained from a camera system. The camera system may be associated with area management vehicle 108. In this illustrative embodiment, camera system 108 is connected to area management vehicle 108.

As used herein, a first component is considered to be associated with a second component by being secured to the second component, bonded to the second component, fastened to the second component, and/or connected to the second component in some other suitable manner. The first component also may be connected to the second component through using a third component. The first component is also considered to be associated with the second component by being formed as part of and/or an extension of the second component.

Area management vehicle 108 does not attempt to cross boundary 134 and/or boundary 102. That is, when area management vehicle 108 detects that area management vehicle 108 has come within a particular distance of boundary 134 and/or boundary 102, area management vehicle 108 continues operation in a direction that does not move area management vehicle 108 closer to boundary 134 and/or boundary 102.

Boundary 112, boundary 136, and boundary 138 are additional borders for the operation of area management vehicle 108. Boundary 112, boundary 136, and boundary 138 may be borders detectable by a number of sensors associated with area management vehicle 108. In this illustrative embodiment, boundary 138, boundary 136, and boundary 112 are radio frequency identification (RFI D) tags buried within lawn 132 to form a border for the operation of area management vehicle 108.

When area management vehicle 108 detects that area management vehicle 108 has come within a particular distance of boundary 134 and/or boundary 102, area management vehicle continues operation in a direction that does not move area management vehicle closer to boundary 134 and/or boundary 102. In this illustrative embodiment, area management vehicle 108 detects the presence of radio frequency identifier tags within boundary 112, boundary 138, and/or boundary 136.

Area management vehicle 108 does not attempt to cross boundary 112, boundary 136 and/or boundary 138. That is, when area management vehicle 108 detects that area management vehicle 108 has come within a particular distance of boundary 112, boundary 136, and/or boundary 138, area management vehicle 108 continues operation in a direction that does not move area management vehicle closer to boundary 112, boundary 136 and/or boundary 138.

Insufficient growth areas 120 are portions of lawn 132 in which growth of a particular plant is below a specified level of growth. In an illustrative embodiment, grass growth is below the specified level of growth in insufficient growth areas 120. The specified level of growth is a level of growth for a plant in these examples. In one illustrative embodiment, the level of growth is the amount of coverage for plant life in a certain area. In other words, the level of growth increases as the quantity of plants in a given area increases. Alternatively, the level of growth may refer to the height of plants in a particular area. The specified level of growth may be defined by a user or predetermined based on the type of grass on lawn 132.

In some illustrative embodiments, insufficient growth areas 120 have no growth of the plant. In other illustrative embodiments, the user modifies the specified level of growth and/or the specified plant such that the current level of growth in insufficient growth areas 120 is below the specified level of growth.

Area management vehicle 108 detects insufficient growth areas 120 using image information obtained from a camera system as area management vehicle 108 travels through lawn 132. Area management vehicle 108 applies a resource to insufficient growth areas 120 to increase growth of the particular plant in insufficient growth areas 120 and reduce the occurrence of insufficient growth areas 120. In this illustrative embodiment, the resource applied by area management vehicle 108 to insufficient growth areas 120 is grass seed.

Undesired plant growth areas 128 are areas within lawn 132 in which a plant undesired by the user is detected by area management vehicle 108. In an illustrative embodiment, undesired plant growth areas 128 are weeds. Area management vehicle 108 detects undesired plant growth areas 128 while traveling through lawn 132 using image information obtained from a camera system.

Area management vehicle 108 may apply a resource to undesired plant growth areas 128 to reduce the occurrence of undesired plant growth areas 128. In one illustrative embodiment, area management vehicle 108 applies a weed control product. One example of a weed control product is Ortho Weed-B-Gon from The Scotts Company LLC in Marysville, Ohio. Application of the weed control product to undesired plant growth areas 28 stop weeds from growing in undesired plant growth areas 128. Stopping the growth of weeds may include, killing the weeds and/or preventing the weeds from spreading.

Change in elevation 130 is a change in the elevation that occurs within the portion of the land denoted by change in elevation 130. Change in elevation 130 may be an inconsistency in lawn 132 if change in elevation 130 does not meet a specified change in elevation for the particular portion of lawn 132. For example, change in elevation 130 is an inconsistency in lawn 132 if the elevation decreases in the particular area by about 1 foot over about 6 feet when the specification is for an increase of about 1 foot over about 6 feet.

Area management vehicle 108 may detect change in elevation 130 using a grade sensor. In one illustrative embodiment, the grade sensor is a gyroscope. When area management vehicle 108 detects change in elevation 130, area management vehicle 108 may determine whether change in elevation 130 is an inconsistency in lawn 132. Change in elevation 130 is an inconsistency in lawn 132 if change in elevation 130 falls outside of a specified change in elevation for the portion of lawn 132.

Area management vehicle 108 may apply a resource to reduce the occurrence of change in elevation 130. In one illustrative embodiment, area management vehicle 108 applies soil to change in elevation 130 such that change in elevation 130 meets the specified change in elevation for the portion of lawn 132. In another illustrative embodiment, area management vehicle 108 uses a digging system to remove or transplant soil from change in elevation 130.

Shrub growth 116 is growth from shrub 114 that is within lawn 132 and within boundary 102, boundary 134, boundary 112, boundary 136, and boundary 138. In this illustrative embodiment, shrub growth 116 extends from shrub 114 located outside border 102 to within border 102. Area management vehicle 108 detects shrub growth 116 while traveling through lawn 132 using image information obtained from a camera system.

Once shrub growth 116 is detected along border 102, area management vehicle 108 reduces shrub growth 116. In this illustrative embodiment, area management vehicle 108 trims shrub growth 116 to no longer extend across border 102. Area management vehicle 108 may compare image information obtained from a camera system prior to the trimming and after the trimming to determine whether shrub growth 116 has been reduced such that shrub growth 116 no longer extends across border 102 from shrub 114.

Marked area 126 is a portion of lawn 132 marked with a designation. Marked area 126 may be an area to be tilled. In one illustrative embodiment, marked area 126 is an area to be converted from grass into a flower bed by tilling the soil. The designation may be paint or dead growth. For example, the designation may be that the portion of lawn 132 in marked area 126 is spray painted or that the portion of lawn 132 in marked area 126 contains a particular amount of dead growth. In one illustrative embodiment, a chemical grass remover is applied to marked area 126 to deaden the portion of lawn 132 within marked area 126.

Area management vehicle 108 detects marked area 126 while traveling through lawn 132 using image information obtained from a camera system. Area management vehicle 108 operates a tilling system within marked area 126. Area management vehicle 108 may operate the tilling system for a particular period of time or until area management vehicle detects that marked area 126 no longer contains the designator using image information obtained from the camera system. For example, area management vehicle 108 may operate the tilling system within marked area 126 until the dead growth designator is no longer detectable using the image information.

In some illustrative embodiments, marked area 126 is bordered on a number of sides by border 122 of marked area 126. While operating the tilling system, area management vehicle 108 may move within marked area 126. In such illustrative embodiments, border 122 of marked area 126 is used by area management vehicle 108 to define a number of edges to marked area 126. In this illustrative embodiment, marked area 126 is enclosed by boundary 134 and border 122 of marked area 126. In some illustrative embodiments, border 122 of marked area 126 is a hose. For example, border 122 may be a garden hose.

Lawn 132 also contains flower bed 110. Flower bed 110 is an area in which flowers are grown separate from lawn 132. In one illustrative embodiment, flower bed 110 contains mulch and flowers, but does not contain grass. Flower bed 110 may be configured in an aesthetically pleasing shape.

Designated area 118 is an area marked with a designator. In this illustrative embodiment, designated area 118 surrounds flower bed 110. Designated area 118 is an area where edging material is to be installed. The designator for designated area 118 marks designated area 118 for installation of edging material. For example, designated area 118 may be a path marked with spray paint.

Area management vehicle 108 detects designated area 118 while traveling through lawn 132 using image information from a camera system. Area management vehicle 108 operates a digging system in designated area 118. In one illustrative embodiment, area management vehicle 108 operates the digging system to dig designated area to a predetermined depth. Area management vehicle 108 may move along designated area 118 while operating the digging system.

Area management vehicle 108 may operate the digging system for a particular period of time or until area management vehicle 108 detects that designated area 118 no longer contains the designator using image information obtained from the camera system. For example, area management vehicle 108 may move along designated area 118, and operate the digging system within designated area 118 until the spray paint is no longer detectable using the image information.

In another illustrative embodiment, area management vehicle 108 also applies a resource to designated area 118. Area management vehicle 108 may apply the resource to designated area 118 while operating the digging system or after digging in designated area 118 is complete.

The resource may be an edging material. Edging material is a substance that substantially prevents growth from one side of the edging material from spreading to the other side of the edging material. In this illustrative embodiment, the edging material comprises a number of solid pieces of edging material. For example, the edging material may be a number of substantially spherical pieces of material. In such an illustrative embodiment, area management vehicle 108 may then apply an adhesive to the pieces of edging material. The adhesive may be a liquid which dries or hardens over time. The edging material may thus substantially prevent growth from spreading from one side of the edging material to the other side of the edging material.

Area management vehicle 108 may operate in semi-autonomous or fully autonomous modes. In a semi-autonomous mode, area management vehicle 108 may be positioned, engaged, and/or disengaged by a user. Additionally, the user may specify a number of tasks for the area management vehicle 108 to perform at each operation of area management vehicle 108. In a fully autonomous mode, area management vehicle 108 uses a set of known inconsistencies, boundaries, and resources to travel through lawn 132 within boundary 134, boundary 112, boundary 102, boundary 136, and boundary 138. Area management vehicle 108 detects inconsistencies and applies resources, detects and tills marked areas, and detects designated areas, digs in the designated areas, and applies edging material in the designated areas.

In some illustrative embodiments, area management vehicle 108 is connected to network 104. That is, area management vehicle 108 transmits and/or receives data from network 104. Network 104 may be a wired or wireless network. For example, network 104 may be an 802.11g wireless connection. Computer 106 is also connected to network 104. Computer 106 may be connected to network 104 using a wired or wireless connection.

Computer 106 may transmit operational parameters to area management vehicle 108. The operational parameters may be specifications or options used by area management vehicle 108 during operation of area management vehicle 108. For example, computer 106 may transmit a specified change in elevation, a number of weed types to reduce, and a number of boundary types to detect. Additionally, computer 106 may transmit software updates, such as firmware updates, to area management vehicle 108.

On the other hand, area management vehicle 108 may transmit status updates to computer 106 using network 104. Computer 106 may present the status updates on a display. For example, area management vehicle 108 may transmit a log of times area management vehicle 108 was activated and a log of tasks performed. Area management vehicle 108 may also transmit image information obtained from a camera system for future analysis.

The illustration of area management environment 100 in Figure 1 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, shrub growth 116 may be tree growth that crosses border 102. Undesired plant growth areas 128 may be flowers or another type of undesired plant. In some illustrative embodiments, boundary 112, boundary 136, and boundary 138 are also physical borders, like boundary 134 and boundary 102.

Additionally, area management vehicle 108 may be configured to operate up to a particular distance from the location at which area management vehicle 108 was engaged. In such an embodiment, boundary 134, boundary 112, boundary 102, boundary 136, and boundary 138 may be absent. When area management vehicle 108 has traveled a particular distance from the location at which area management vehicle 108 was engaged, area management vehicle 108 may return to the location at which area management vehicle was engaged or another predetermined point.

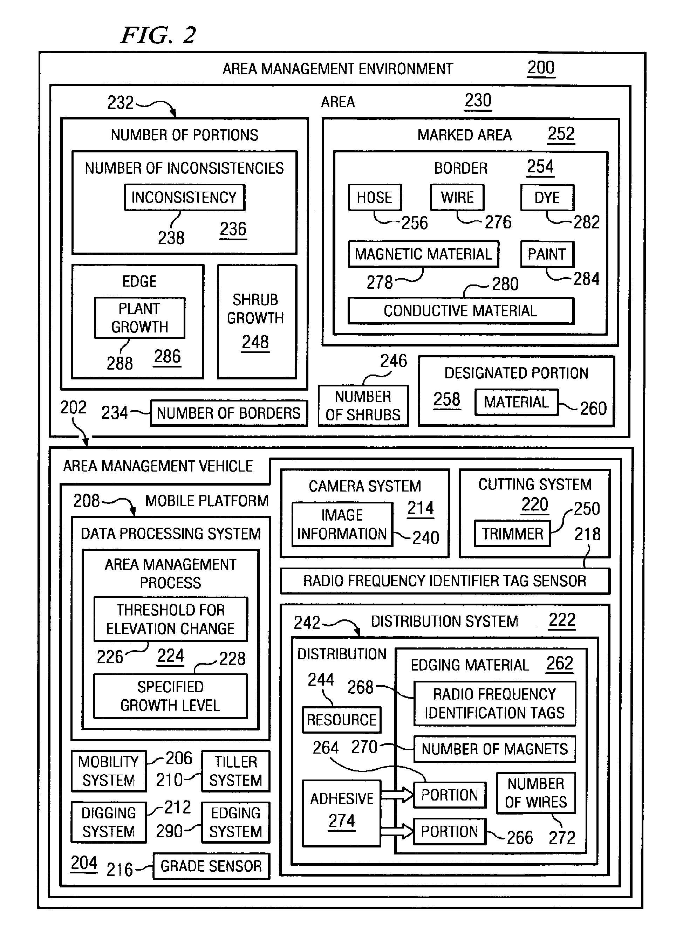

Turning now to Figure 2, a block diagram of an area management environment is depicted in accordance with an illustrative embodiment. Area management environment 100 in Figure 1 is an example of one implementation of area management environment 200 in Figure 2. Area management vehicle 202 is an example implementation of area management vehicle 108 from Figure 1. Area 230 is an example implementation of lawn 132 in Figure 1. Area management environment 200 is an environment in which area management vehicle 202 may operate. Area management vehicle 202 comprises mobile platform 204. Mobile platform 204 may be a base with which the various components of area management vehicle 202 are associated. For example, mobile platform 204 may be a frame to which the components of area management vehicle 202 are attached. Mobile platform 204 may comprise mobility system 206. Mobility system 206 propels, steers, and stops area management vehicle 202.

Area management vehicle 202 also comprises data processing system 208, tiller system 210, digging system 212, camera system 214, grade sensor 216, radio frequency identifier tag sensor 218, cutting system 220, and distribution system 222. Data processing system 208 runs area management process 224. Area management process 224 controls the operation of tiller system 210, mobility system 206, digging system 212, camera system 214, cutting system 220, and distribution system 222. Area management process 224 may also receive input from grade sensor 216, camera system 214, and radio frequency identifier tag sensor 218. Area management process 224 may store parameters for operation of area management vehicle 202. For example, area management process 224 may store threshold for elevation change 226 and specified growth level 228.

Area management environment 200 contains area 230. Area 230 may contain number of portions 232. Number of portions 232 is a number of parts of area 230. Area management vehicle 202 may operate within area 230. Area 230 may be at least partially enclosed with number of borders 234. Number of borders 234 is an example of boundary 112, boundary 102, boundary 136, boundary 138 and boundary 134 from Figure 1.

Number of portions 232 may contain number of inconsistencies 236. Inconsistency 238 is an inconsistency within number of inconsistencies 236. Inconsistency 238 is an undesired condition within number of portions 232. For example, area 230 may be a lawn. Inconsistency 238 may be weeds within the lawn, or number of portions 232 of area 230 that do not meet specified growth level 228.

Area management vehicle 202 travels through area 230 using mobility system 206. In one illustrative embodiment, area management process 224 causes area management vehicle 202 to move within area 230 and obtain image information 240 from camera system 214 until a border in number of borders 234 is detected within image information 240.

When a border in number of borders 234 is detected, area management process 224 uses mobility system 206 to change direction and continue moving through number of portions 232. In one illustrative embodiment, the area management vehicle 202 uses a predetermined pattern of travel through number of portions 232. In other illustrative embodiments, area management vehicle 202 uses a pseudo-random path determined by area management process 224 until a border in number of borders 234 is reached. A pseudo-random path is a path that exhibits statistical randomness while being generated by a partially or an entirely deterministic causal process. In one illustrative example, the pseudo-random path is not substantially predictable by a human observer.

While area management vehicle 202 travels through number of portions 232, area management process 224 receives image information 240 from camera system 214. Image information 240 may comprise photo and/or video information. Camera system 214 may comprise one or more cameras capable of recording photo or video information. Camera system 214 may be directed to receive image information up to a particular distance in one or more directions from area management vehicle 202.

When area management process 224 detects inconsistency 238 within image information 240, area management process 224 causes distribution system 222 to perform distribution 242. Distribution 242 is a distribution of resource 244. Resource 244 is a substance that substantially reduces the occurrence of inconsistency 238. Alternatively, area management process 224 may cause digging system 212 to remove inconsistency 238 from number of portions 232 to reduce the occurrence of inconsistency 238.

For example, area management process 224 may detect an inconsistency 238 of weeds within image information 240. Area management process 224 causes distribution system 222 to make a distribution 242 of resource 244, such as weed remover, onto inconsistency 238. The weed remover may be applied in liquid form or applied to the weeds by distribution system 222 painting the weed remover onto the weeds. Alternatively, area management process 224 may cause digging system 212 to remove weeds from number of portions 232 to reduce the occurrence of inconsistency 238. Additionally, in some illustrative embodiments, distribution system 222 makes distribution 242 of grass seed after resource 244 is applied.

Distribution 242 may be applied such that distribution 242 terminates when area management process 224 no longer detects inconsistency 238 in image information 240. Alternatively, distribution 242 may continue until resource 244 is depleted within area management vehicle 202. For example, weed remover may be applied to weeds until the weeds are no longer detected within image information 240, or until weed remover is depleted within area management vehicle 202. A predetermined amount of resource 244 may also be applied to inconsistency 238.

Area 230 may also contain number of shrubs 246. Shrubs in number of shrubs 246 are woody plants with multiple stems and lacking a single trunk. For example, a shrub in number of shrubs 246 may be a magnolia bush. In some illustrative embodiments, number of shrubs 246 may grow from soil outside number of borders 234. However, shrub growth 248 may extend from number of shrubs 246 across number of borders 234. In such an embodiment, area management process 224 uses image information 240 to detect shrub growth 248 while operating in area 230.

When shrub growth 248 is detected, area management process 224 may operate cutting system 220. Cutting system 220 may comprise trimmer 250. Trimmer 250 is a number of motorized blades configured to disconnect shrub growth 248 from number of shrubs 246. Of course, cutting system 220 may also comprise a number of manual blades. Manual blades are cutting surfaces that are not operated by a motor. For example, two blades may be actuated together to cut a material without a motor. Area management process 224 uses cutting system 220 to trim shrub growth 248 such that shrub growth 248 no longer extends across number of borders 234 from number of shrubs 246.

Number of portions 232 of area 230 may also contain plant growth 288 that extends across edge 286. Plant growth 288 may be rooted in number of portions 232 and extend across edge 286. Plant growth 288 may be a number of plants or a portion of the number of plants. For example, plant growth 288 may be a number of blades of grass, or a portion of a blade of grass. Edge 286 is a non-plant material. For example, edge 286 may be a sidewalk, a street, a curb, a driveway, a portion of concrete, a portion of asphalt, or another suitable non-plant material. Edge 286 and/or plant growth 288 may be detected using image information 240 while operating in number of portions 232.

When plant growth 288 is detected in number of portions 232, area management process 224 may operate edging system 290. Edging system 290 is a number of tools configured to trim plant growth 288. Edging system 290 may comprise a lawn edger. The lawn edger comprises a number of blades that rotate around an axis. The axis is substantially parallel to the ground. Thus, the number of blades rotate around the axis such that the cutting surface of number of blades contacts plant growth 288. The number of blades may be operated by a motor. Edging system 290 trims plant growth 288 by cutting plant growth 288 that extends across edge 286 such that plant growth 288 no longer extends across edge 286.

Area management process 224 may also detect marked area 252 in image information 240. Marked area 252 is a portion of area 230 marked for tilling by area management vehicle 202. In one illustrative embodiment, marked area 252 is marked for tilling such that a grass area may be converted to a flower bed. Marked area 252 may be marked with spray paint or a dye, or another suitable marker.

Alternatively, marked area 252 may be marked by a particular amount of dead or discolored growth. In one illustrative embodiment, a grass killer is applied to marked area 252 prior to operation of area management vehicle 202. Once marked area 252 begins to become discolored from the application of the grass killer, area management vehicle 202 may detect marked area 252.

Marked area 252 may also be marked by radio frequency identifier tags. Area management vehicle 202 may detect the presence and/or data transmitted by radio frequency identifier tags using radio frequency identifier tag sensor 218.

Marked area 252 may end on at least one side with border 254. Border 254 designates the end of marked area 252. Border 254 may enclose a portion of marked area 252, enclose all of marked area 252, or designate one side of marked area 252. In one illustrative embodiment, border 254 is a hose 256. For example, a hose 256 may be a garden hose. In other advantageous embodiments, border 254 is a wire 276, conductive material 280, magnetic material 278, or dye 282. Dye 282 may be paint. In yet other advantageous embodiments, border 254 is a length of flexible material. For example, border 254 may be a length of rope, a length of chain, or another suitable flexible material.

When area management process 224 detects marked area 252 in image information 240, area management process 224 operates tiller system 210. Tiller system 210 turns the soil in marked area 252 over. Tiller system 210 may comprise a number of blades that rotate such that the contents of marked area 252 are moved and/or turned over.

Area management vehicle 202 moves within marked area to operate tiller system 210 substantially throughout marked area 252. In some illustrative embodiments, border 254 is absent from marked area 252. In such an embodiment, area management vehicle operates within marked area and determines whether area management vehicle is within marked area using image information 240. In other illustrative embodiments, marked area 252 is not designated with paint or dye. In such an embodiment, border 254 designates marked area. Area management vehicle 202 may travel along border 254 using mobility system 206 until the end or border 254 is reached or area management vehicle 202 follows border 254 until the point at which area management vehicle 202 began operating tiller system 210.

Area management process 224 may also use image information 240 to detect designated portion 258. Designated portion 258 is a portion of area 204 that is labeled with a designator. The designator may be applied by a user. The designator may be spray paint or dye. Designated portion 258 may contain material 260. Material 260 may be soil, rocks, sand, or a combination thereof. In one illustrative embodiment, designated portion 258 is a portion of area 204 where edging material 262 is to be installed. Alternatively, designated portion 258 may be a portion of area 204 where landscaping barrier is to be installed.

When area management process 224 detects designated portion 258 using image information 240, area management process 224 may operate digging system 212. Digging system 212 is configured to remove material 260 from designated portion 258. Material 260 may be stored within area management vehicle or moved to another location. Area management process 224 causes digging system 212 to remove material 260 from designated portion 258 until a predetermined depth is reached. Alternatively, area management process 224 may operate digging system 212 until a particular quantity of material 260 is moved or stored.

Once area management process 224 disengages digging system 212, area management process 224 may cause distribution system 222 to make distribution 242 of edging material 262. Edging material 262 is a substance that substantially prevents growth from one side of edging material 262 from spreading to the other side of edging material 262. In this illustrative embodiment, edging material 262 comprises a number of solid pieces of edging material 262. In this example, edging material 262 comprises portion 264 and portion 266. For example, edging material 262 may be a number of substantially spherical pieces of material. In some embodiments, edging material 262 also comprises radio frequency identification tags 268, number of magnets 270, and/or number of wires 272. Radio frequency identification tags 268, number of magnets 270, and/or number of wires 272 may be used by the navigational systems of autonomous robots. In another illustrative embodiment, edging material 262 may be a material for conveying and/or delivering water. For example, edging material 262 may be an irrigation drip tape.

In such an illustrative embodiment, area management process 224 causes distribution system 222 to distribute edging material 262 into designated portion 258. Area management process 224 then causes distribution 242 such that adhesive 274 is applied to portion 264 and portion 266 of edging material 262. Adhesive 274 may be a liquid. Adhesive 274 bonds portion 264 to portion 266. Edging material 262 may thus substantially prevent growth from spreading from one side of edging material 262 to the other side of edging material 262.

Designated portion 258 may be a path. The path may be any suitable shape, and the path may not return to the origin of the path. In an illustrative embodiment in which designated portion 258 is path, edging material 262 functions to separate a number of portions of area 204 from each other. For example, edging material 262 may be applied as a path to enclose a flower bed which should be separated from grass.

On the other hand, designated portion 258 may be an area. In such an illustrative embodiment, edging material 262 functions as a landscape barrier. The landscape barrier may be applied prior to planting on top of the landscape barrier. The landscape barrier may separate plant life present prior to the application of the landscape barrier from new plant life planted after the application of the landscape barrier. The landscape barrier may comprise a number of holes large enough to allow moisture to pass through the landscape barrier. The size of the holes in the landscape barrier may also substantially prevent roots from the plant life from passing through the landscape barrier.

Area management vehicle 202 may be configured to operate for a particular period of time or until area 204 has been covered a particular number of times. Additionally, area management vehicle 202 may be configured to operate in certain time periods. For example, area management vehicle 202 may automatically engage at about 10AM and disengage at about 2PM.

The illustration of area management environment 200 in Figure 2 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, digging system 212 may comprise a depth sensor. The depth sensor may provide input to area management process 224 as to the current depth that digging system 212 has achieved in digging. Additionally, distribution 242 may occur while area management vehicle 202 is being moved by mobility system 206. Alternatively, area management vehicle 202 may periodically stop using mobility system 206 to move to detect inconsistency 238, make distribution 242, or other suitable tasks.

In these examples, area management environment 100 is a lawn. However, area management environment 100 may also be a floor of a structure, a number of windows, and a surface to be painted.

The different illustrative embodiments recognize and take into account that spot treating a lawn for inconsistencies like weeds, undesired changes in elevation, shrubs that have growth extending into an undesired area, or growth that is less than a specified level of growth for the area may be inefficient and labor-intensive. The different illustrative embodiments also recognize and take into account that applying seed evenly over an area may be difficult for a human.

The different illustrative embodiments also recognize and take into account that digging a trench and installing edging material can be difficult and time-consuming. The different illustrative embodiments also recognize and take into account that tilling a portion of a lawn for conversion to a flower bed is difficult because current tilling systems may be cumbersome and difficult to position and/or direct.

The different illustrative embodiments also recognize that it is more convenient for a robot to apply a chemical or other material to a lawn than a human when multiple applications are desirable. The different advantageous embodiments recognize and take into account that a safer chemical may be used, regardless of the number of applications, when a robot is applying the chemical.

Thus, the illustrative embodiments provide an apparatus comprising a platform, a camera system, a distribution system, and a processor unit. The platform is configured to move through an area. The camera system is associated with the platform, and the camera system is configured to create image information. The distribution system is associated with the platform and configured to distribute a resource. The processor unit is configured to run an area management process to receive the image information from the camera system, identify a number of inconsistencies 236 in the area using the image information, and control a distribution of the resource by the distribution system in a number of portions of the area in which an inconsistency in the number of inconsistencies is identified.

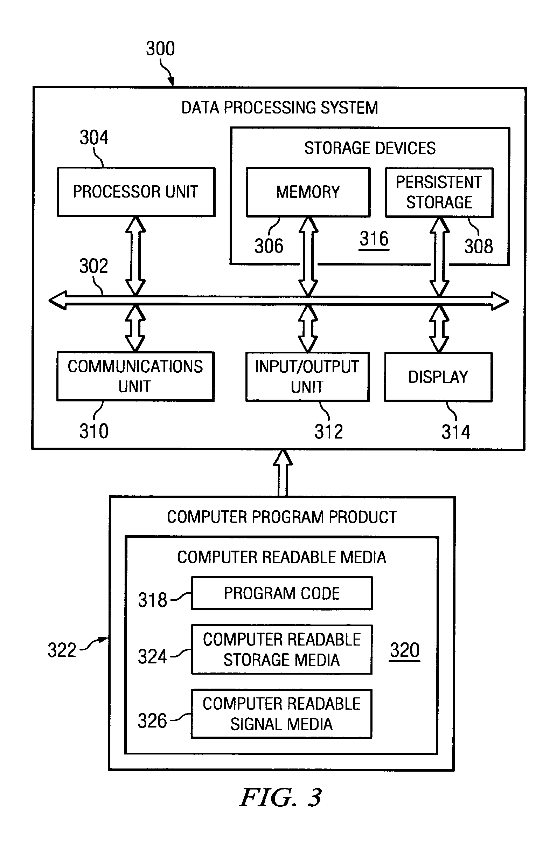

Turning now to Figure 3, a block diagram of a data processing system is depicted in accordance with an advantageous embodiment. Computer 106 is an example implementation of data processing system 300. Data processing system 300 is an example of a data processing system that may be found in area management vehicle 108 in Figure 1. Further, data processing system 300 is an example of data processing system 208 in Figure 2.

In this illustrative example, data processing system 300 includes communications fabric 302, which provides communications between processor unit 304, memory 306, persistent storage 308, communications unit 310, input/output (I/O) unit 312, and display 314.

Processor unit 304 serves to execute instructions for software that may be loaded into memory 306. Processor unit 304 may be a set of one or more processors or may be a multi-processor core, depending on the particular implementation. Further, processor unit 304 may be implemented using one or more heterogeneous processor systems, in which a main processor is present with secondary processors on a single chip. As another illustrative example, processor unit 304 may be a symmetric multi-processor system containing multiple processors of the same type.

Memory 306 and persistent storage 308 are examples of storage devices 316. A storage device is any piece of hardware that is capable of storing information, such as, for example, without limitation, data, program code in functional form, and/or other suitable information either on a temporary basis and/or a permanent basis. Memory 306, in these examples, may be, for example, a random access memory, or any other suitable volatile or non-volatile storage device. Persistent storage 308 may take various forms, depending on the particular implementation. For example, persistent storage 308 may contain one or more components or devices. For example, persistent storage 308 may be a hard drive, a flash memory, a rewritable optical disk, a rewritable magnetic tape, or some combination of the above. The media used by persistent storage 308 may be removable. For example, a removable hard drive may be used for persistent storage 308.

Communications unit 310, in these examples, provides for communication with other data processing systems or devices. In these examples, communications unit 310 is a network interface card. Communications unit 310 may provide communications through the use of either or both physical and wireless communications links.

Input/output unit 312 allows for the input and output of data with other devices that may be connected to data processing system 300. For example, input/output unit 312 may provide a connection for user input through a keyboard, a mouse, and/or some other suitable input device. Further, input/output unit 312 may send output to a printer. Display 314 provides a mechanism to display information to a user.

Instructions for the operating system, applications, and/or programs may be located in storage devices 316, which are in communication with processor unit 304 through communications fabric 302. In these illustrative examples, the instructions are in a functional form on persistent storage 308. These instructions may be loaded into memory 306 for execution by processor unit 304. The processes of the different embodiments may be performed by processor unit 304 using computer implemented instructions, which may be located in a memory, such as memory 306.

These instructions are referred to as program code, computer usable program code, or computer readable program code that may be read and executed by a processor in processor unit 304. The program code, in the different embodiments, may be embodied on different physical or computer readable storage media, such as memory 306 or persistent storage 308.

Program code 318 is located in a functional form on computer readable media 320 that is selectively removable and may be loaded onto or transferred to data processing system 300 for execution by processor unit 304. Program code 318 and computer readable media 320 form computer program product 322. In one example, computer readable media 320 may be computer readable storage media 324 or computer readable signal media 326. Computer readable storage media 324 may include, for example, an optical or magnetic disc that is inserted or placed into a drive or other device that is part of persistent storage 308 for transfer onto a storage device, such as a hard drive, that is part of persistent storage 308. Computer readable storage media 324 also may take the form of a persistent storage, such as a hard drive, a thumb drive, or a flash memory that is connected to data processing system 300. In some instances, computer readable storage media 324 may not be removable from data processing system 300.
Alternatively, program code 318 may be transferred to data processing system 300 using computer readable signal media 326. Computer readable signal media 326 may be, for example, a propagated data signal containing program code 318. For example, computer readable signal media 326 may be an electro-magnetic signal, an optical signal, and/or any other suitable type of signal. These signals may be transmitted over communications links, such as wireless communications links, an optical fiber cable, a coaxial cable, a wire, and/or any other suitable type of communications link. In other words, the communications link and/or the connection may be physical or wireless in the illustrative examples. The computer readable media also may take the form of non-tangible media, such as communications links or wireless transmissions containing the program code.

In some illustrative embodiments, program code 318 may be downloaded over a network to persistent storage 308 from another device or data processing system through computer readable signal media 326 for use within data processing system 300. For instance, program code stored in a computer readable storage media in a server data processing system may be downloaded over a network from the server to data processing system 300. The data processing system providing program code 318 may be a server computer, a client computer, or some other device capable of storing and transmitting program code 318.

The different components illustrated for data processing system 300 are not meant to provide architectural limitations to the manner in which different embodiments may be implemented. The different illustrative embodiments may be implemented in a data processing system including components in addition to or in place of those illustrated for data processing system 300. Other components shown in Figure 3 can be varied from the illustrative examples shown. The different embodiments may be implemented using any hardware device or system capable of executing program code. As one example, data processing system 300 may include organic components integrated with inorganic components and/or may be comprised entirely of organic components excluding a human being. For example, a storage device may be comprised of an organic semiconductor.

As another example, a storage device in data processing system 300 is any hardware apparatus that may store data. Memory 306, persistent storage 308, and computer readable media 320 are examples of storage devices in a tangible form.

In another example, a bus system may be used to implement communications fabric 302 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 306 or a cache such as found in an interface and memory controller hub that may be present in communications fabric 302.

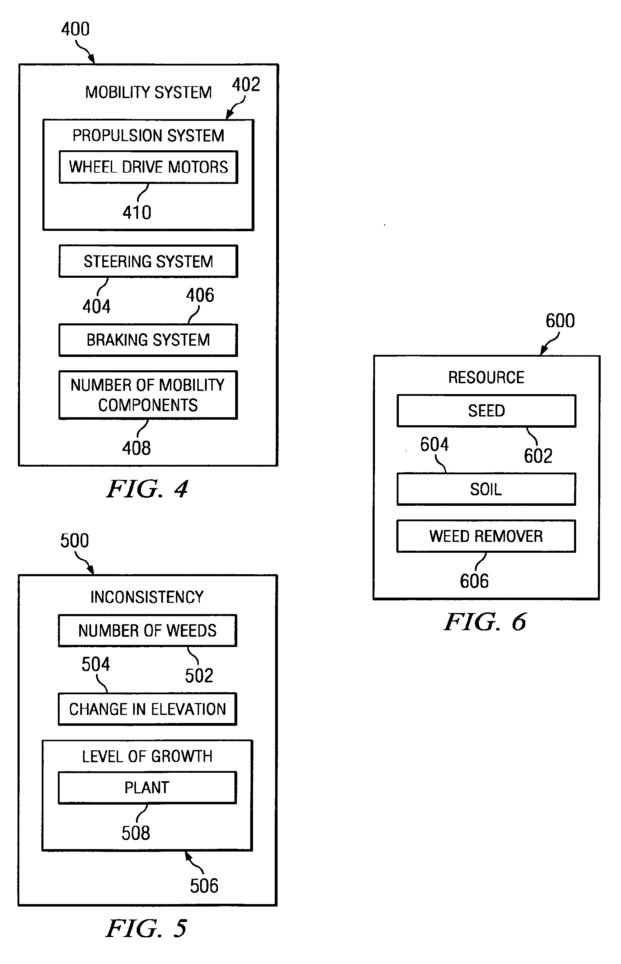

With reference now to Figure 4, a block diagram of a mobility system is depicted in accordance with an illustrative embodiment. Mobility system 400 is an example of one implementation of mobility system 206 in Figure 2.

Mobility system 400 provides mobility for an area management vehicle, such as area management vehicle 202. Mobility system 400 may take various forms. Mobility system 400 may include, for example, without limitation, propulsion system 402, steering system 404, braking system 406, and number of mobility components 408.

Propulsion system 402 may maintain or increase the speed at which an autonomous vehicle moves in response to instructions received from an area management process, such as area management process 224. Propulsion system 402 may be an electrically controlled propulsion system. Propulsion system 402 may be, for example, without limitation, an internal combustion engine, an internal combustion engine/electric hybrid system, an electric engine, or some other suitable propulsion system. In an illustrative example, propulsion system 402 may include wheel drive motors 410. Wheel drive motors 410 may be an electric motor incorporated into a mobility component, such as a wheel, that drives the mobility component directly. In one illustrative embodiment, steering may be accomplished by differentially controlling wheel drive motors 410.
Steering system 404 controls the direction or steering in response to commands received from the area management process. Steering system 404 may be, for example, without limitation, an electrically controlled hydraulic steering system, an electrically driven rack and pinion steering system, a differential steering system, or some other suitable steering system. In an illustrative example, steering system 404 may include a dedicated wheel configured to control number of mobility components 408.

Braking system 406 may slow down and/or stop an autonomous vehicle in response to the area management process. Braking system 406 may be an electrically controlled braking system. This braking system may be, for example, without limitation, a hydraulic braking system, a friction braking system, a regenerative braking system using wheel drive motors 410, or some other suitable braking system that may be electrically controlled.

Number of mobility components 408 provides autonomous vehicles with the capability to move in a number of directions and/or locations in response to instructions received from the area management process and executed by propulsion system 402, steering system 404, and braking system 406. Number of mobility components 408 may be, for example, without limitation, wheels, tracks, feet, rotors, propellers, wings, and/or other suitable components.

The illustration of mobility system 400 in Figure 4 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, propulsion system 402 may combine wheel drive motors 410 with another form of propulsion. That is, mobility system 400 may provide propulsion using wheel drive motors 410 and tracks driven in another direction. Additionally, in some illustrative embodiments, steering system 404 is absent or only allows operation in a single direction.
Referring now to Figures 5 and 6, a block diagram of an inconsistency and a resource is depicted in accordance with an illustrative embodiment. Inconsistency 500 is an example implementation of inconsistency 238 in Figure 2. Resource 600 is an example implementation of resource 244 from Figure 2.

Inconsistency 500 may be an undesirable condition located within portions of an area, such as number of portions 232 of area 204 in Figure 2. One type of inconsistency 500 is number of weeds 502. Number of weeds 502 comprises any undesired plant growth. In a lawn example, number of weeds may comprise clover, dandelion and crabgrass. When number of weeds 502 is detected by an area management vehicle, the area management vehicle may apply a resource, such as a weed remover 606, to reduce the occurrence of number of weeds 502.

Change in elevation 504 may also be an inconsistency 500. Change in elevation 504 is an inconsistency when change in elevation 504 falls outside a threshold for elevation change for the area. The threshold for elevation change may be stored in a data processing system associated with the area management vehicle, such as threshold for elevation change 226. The threshold may be entered by the user or automatically determined based on the surrounding area. For example, the threshold may be determined based on the average elevation for the area.

An area management vehicle may apply a resource, such as soil 604, to change in elevation 504 to alter change in elevation such that change in elevation falls within the threshold for elevation change for the area. Alternatively, the area management vehicle may operate a digging system in the area to alter the elevation of the area by moving soil 604 or other material. Soil 604 may also contain a number of seeds. For example, soil 604 may be a mixture of soil and grass seed in any suitable combination.

Level of growth 506 may also be inconsistency 500. Level of growth 506 is the degree of growth of plant 508 for a given area. In one illustrative embodiment, level of growth 506 is the amount of coverage for plant 508 in a certain area. In other words, level of growth 506 increases as the quantity of plant 508 in a given area increases. Alternatively, level of growth 506 may refer to the height of plant 508 in a particular area.

Level of growth 506 is inconsistency 500 when level of growth 506 does not meet a specified growth level for plant 508 for the area. The specified growth level may be stored in a data processing system associated with an area management vehicle, such as specified growth level 228 in Figure 2.

An area management vehicle may apply a resource to reduce the occurrence of level of growth 506. In this example, the area management vehicle applies seed 602 to inconsistency 500. The quantity of seed 602 for plant 508 to be distributed may be predetermined or automatically based on the size of inconsistency 500 and/or level of growth 506.
The illustration of inconsistency 500 in Figure 5 and resource 600 in Figure 6 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

Other conditions may be detected as an inconsistency. For example, a fallen tree branch may be detected as an inconsistency and cut using a cutting system. Level of growth may also be inconsistency 500 if level of growth 506 is greater than the specified growth level for the area. In such an example, the area management vehicle may perform operate a cutting system on inconsistency 500 until inconsistency 500 meets the specified level of growth.

Additionally, other resources may be used to reduce the occurrence of inconsistency 500. For example, resource 500 may be a pesticide, a cleaning solution, or paint.

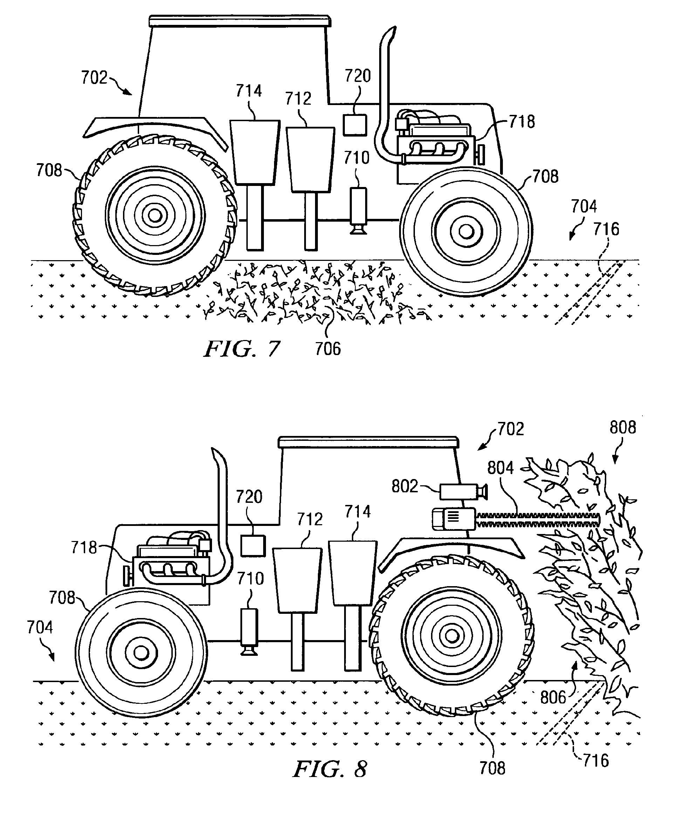

Turning now to Figure 7, an illustration of an area management vehicle reducing a number of weeds is depicted in accordance with an illustrative embodiment. Vehicle 702 is an example implementation of area management vehicle 202 in Figure 2. Vehicle 702 is depicted as reducing number of weeds 706. Number of weeds 706 is an example implementation of number of weeds 502 in Figure 5.

Vehicle 702 comprises data processing system 720 running the area management process, propulsion system 718, wheels 708, camera system 710, distribution system 712, and distribution system 714. Area 704 comprises number of weeds 706 and border 716. In this example, distribution system 712 contains weed remover, and distribution system 714 contains a mixture of seed and soil.

Data processing system 720 runs an area management process, such as area management process 224. The area management process causes propulsion system 718 to propel vehicle 702 through area 704 using wheels 708. The area management process obtains image information from camera system 710. The area management process then detects borders and/or inconsistencies in the image information.

In this example, the area management process detects number of weeds 706. The area management process selects the resource contained within vehicle 702 that reduces number of weeds 706. In this example, the area management process causes distribution system 712 to distribute weed remover onto number of weeds 706. Distribution may take place for a period of time, an amount of weed remover, or until the area management process detects that weed remover has covered number of weeds 706 using image information.

Assume vehicle 702 is moving toward border 716. When camera system 710 detects border 716, the area management process will cause direction of vehicle 702 to be changed. For example, wheels 708 may be moved such that vehicle 702 turns in another direction.

Turning now to Figure 8, an illustration of an area management vehicle trimming a number of shrubs is depicted in accordance with an illustrative embodiment. In this example, shrub 808 is rooted outside border 716. However, shrub growth 806 extends over border 716. Shrub growth 806 is an example implementation of shrub growth 248 in Figure 2.

In this illustrative embodiment, camera system 802 is directed substantially frontward. Camera system 802 may be configured to pivot and/or tilt to increase the angles from which inconsistencies and/or borders may be detected. Camera system 802 provides image information to the area management process running on data processing system 720. In one illustrative embodiment, camera system 802 comprises at least two cameras. In this example, the camera system 802 comprises two cameras. The two cameras provide a stereoscopic view of shrub growth 806.

The area management process detects that shrub growth 806 extends across border 716. The area management process activates trimmer 804. Trimmer 804 is a trimmer like trimmer 250 in Figure 2. Trimmer 804 may pivot and/or tilt to trim shrub growth 806. In one illustrative embodiment, data processing system continues to operate trimmer 804 until area management process receives image information from camera system 802 in which shrub growth 806 is not detected.

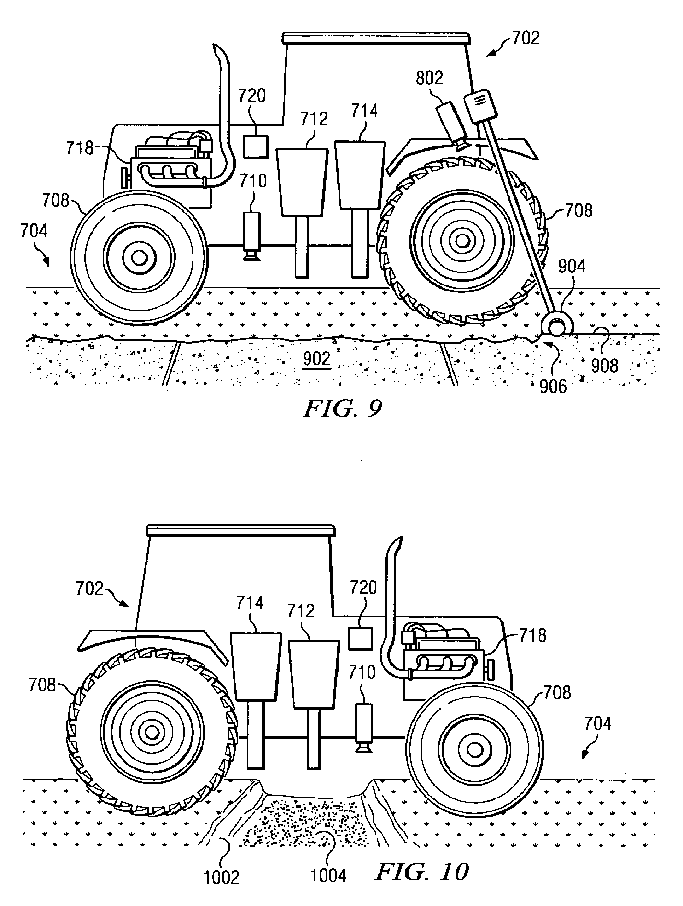

Turning now to Figure 9, an illustration of an area management vehicle trimming plant growth is depicted in accordance with an illustrative embodiment. In this example, lawn 704 is adjacent to sidewalk 902. Edge 908 separates lawn 704 from sidewalk 902. Edge 908 is an example implementation of edge 286 in Figure 2. Grass growth 906 overhangs edge 908 in this example. Grass growth 906 is an example implementation of plant growth 288 in Figure 2.

In this illustrative embodiment, camera system 802 is directed substantially downward. However, camera system 802 may be configured to pivot and/or tilt to increase the angles from which grass growth 906 and/or edge 908 may be detected. Camera system 802 provides image information to the area management process running on data processing system 720. In one illustrative embodiment, camera system 802 comprises at least two cameras. The two cameras provide a stereoscopic view of grass growth 908.

The area management process detects that grass growth 906 extends across edge 908 onto sidewalk 902. The area management process activates edger 904. Edger 904 is a edger like edging system 290 in Figure 2. Edger 904 may pivot and/or tilt to trim grass growth 908. In one illustrative embodiment, the area management process causes to the operation of edger 904 until area management process receives image information from camera system 802 in which grass growth 908 is not detected.

Turning now to Figure 10, an illustration of an area management vehicle distributing an edging material is depicted in accordance with an illustrative embodiment.

In this illustrative embodiment, vehicle 702 is positioned over trench 1002 and designator 1004. Trench 1002 is an example implementation of designated portion 258. As depicted, trench 1002 has already been dug. That is, soil has already been moved from the designated portion represented by trench 1002. Trench 1002 may be dug by a human, a digging device, or a digging system associated with vehicle 702.

Trench 1002 contains designator 1004. Designator 1004 is red spray paint in this example. However, designator 1004 may also be dye or radio frequency identifier tags. Designator 1004 is detected by area management process using image information obtained from camera system 710. Designator 1004 may be detected while vehicle 702 is traveling through area 704. Alternatively, designator 1004 may be positioned over designator 1004 such that the area management process detects designator 1004 upon being engaged.

Once designator 1004 is detected, the area management process causes distribution system 712 to distribute edging material. The edging material in distribution system 712 is an example implementation of edging material 262 in Figure 2. Edging material is distributed into trench 1002. The quantity of edging material distributed may be predetermined, all the edging material available in vehicle 702 or determined based on the length and/or width of designator 1004.

Once edging material is distributed into trench 1002, the area management process causes distribution system 714 to distribute adhesive into trench 1002. Alternatively, the adhesive may be distributed substantially simultaneously with the edging material. The adhesive is an example implementation of adhesive 274 in Figure 2. The adhesive enters the various layers of edging material in trench 1002 and bonds the portions of the edging material to each other. Once adhesive is distributed, the area management process may cause propulsion system 718 to move vehicle 702 in order to detect additional inconsistencies or the area management process may cause vehicle 702 to disengage.

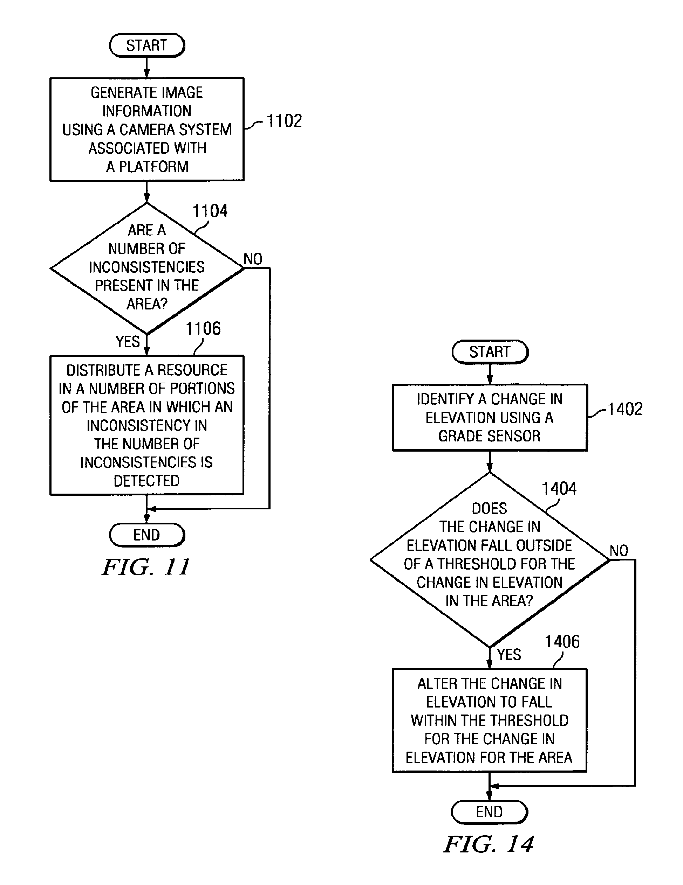

Turning now to Figure 11, a flowchart of a process for managing an area is depicted in accordance with an illustrative embodiment. The process may be implemented in area management environment 200 using area management vehicle 202. The process may be performed by an area management process, such as area management process 224.

The process begins by generating image information using a camera system associated with a platform (operation 1102). The process then determines whether a number of inconsistencies are present in the area (operation 1104). Responsive to a determination that a number of inconsistencies are present in the area, the process distributes a resource in a number of portions of the area in which an inconsistency in the number of inconsistencies is detected (operation 1106). The process terminates thereafter. If the process determines that a number of inconsistencies are not present in the area at operation 1004, the process terminates.

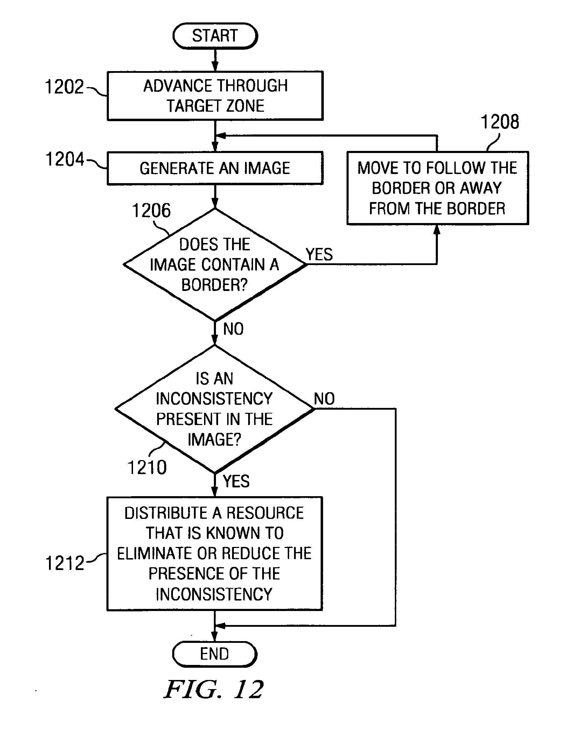

Turning now to Figure 12, a flowchart of a process for distributing a resource is depicted in accordance with an illustrative embodiment. The process may be implemented in area management environment 200 using area management vehicle 202. The process may be performed by an area management process, such as area management process 224.

The process begins by advancing through the target zone (operation 1202). The process then generates an image (operation 1204). The image may be generated using a number of cameras within a camera system. The process then determines whether the image contains a border (operation 1206). The border may be a border such as number of borders 234 in Figure 2. The determination may be made using an area management process, such as area management process 224. If the process determines that the image contains a border, the process moves to follow the border or away from the border (operation 1208). The process then returns to operation 1204.

If the process determines that the image does not contain a border at operation 1206, the process determines if an inconsistency is present in the image (operation 1210). The inconsistency may be an inconsistency such as inconsistency 238 in Figure 2. If the process determines that an inconsistency is present in the image, the process distributes a resource that is known to eliminate or reduce the presence of the inconsistency (operation 1212). For example, if the inconsistency is the presence of weeds, the process may distribute a resource, such as weed killer, to eliminate or reduce the presence of the weeds. The process terminates thereafter. If the process determines that an inconsistency is not present in the image at operation 1210, the process terminates.

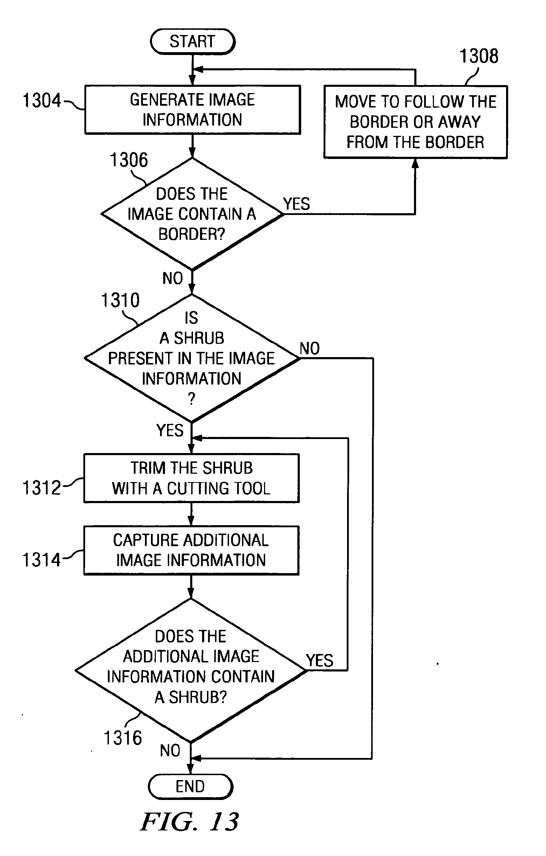

Turning now to Figure 13, a flowchart of a process for trimming a number of shrubs is depicted in accordance with an illustrative embodiment. The process may be implemented in area management environment 200 using area management vehicle 202. The process may be performed by an area management process, such as area management process 224.

The process begins by generating image information (operation 1304). The process then determines whether the image contains a border (operation 1306). The image may be obtained using a camera system, such as camera system 214. If the image contains a border, then the process moves to follow the border or away from the border (operation 1308). The process then returns to operation 1304.

If the process determines that the image does not contain a border at operation 1306, the process determines whether a shrub is present in the image information (operation 1310). In an illustrative embodiment, the process determines that a shrub is present in the image information when a portion of the shrub or shrub growth is within a number of borders that enclose an area. If the process determines that a shrub is present in the image information, the process trims the shrub with a cutting tool (operation 1312). If the process determines that a shrub is not present in the image information at operation 1310, the process terminates.

The process then captures additional image information (operation 1314). The process then determines whether the additional image information contains a shrub (operation 1316). If the process determines that the additional image information contains a shrub, the process returns to operation 1312. If the process determines that the additional image information does not contain a shrub at operation 1316, the process terminates.

Turning now to Figure 14, a flowchart of a process for altering a change in elevation is depicted in accordance with an illustrative embodiment. The process may be implemented in area management environment 200 using area management vehicle 202 in Figure 2.

The process begins by identifying a change in elevation using a grade sensor (operation 1402). The change in elevation may be identified using a grade sensor, such as grade sensor 216 in Figure 2. The process then determines whether the change in elevation falls outside of a threshold for the change in elevation in the area (operation 1404). The threshold may be designated by the user or automatically determined based on the elevation in one or more other portions of the area. If the process determines that the change in elevation falls outside of a threshold for the change in elevation in the area, the process alters the change in elevation to fall within the threshold for the change in elevation for the area (operation 1406). In an illustrative embodiment, the change in elevation is altered by distributing a resource, such as soil. In another illustrative embodiment, the change in elevation is altered by operating a digging system in the area such that the change in elevation falls within the threshold for the change in elevation for the area. The process terminates thereafter. If the process determines that the change in elevation does not fall outside of a threshold for the change in elevation in the area at operation 1404, the process terminates.

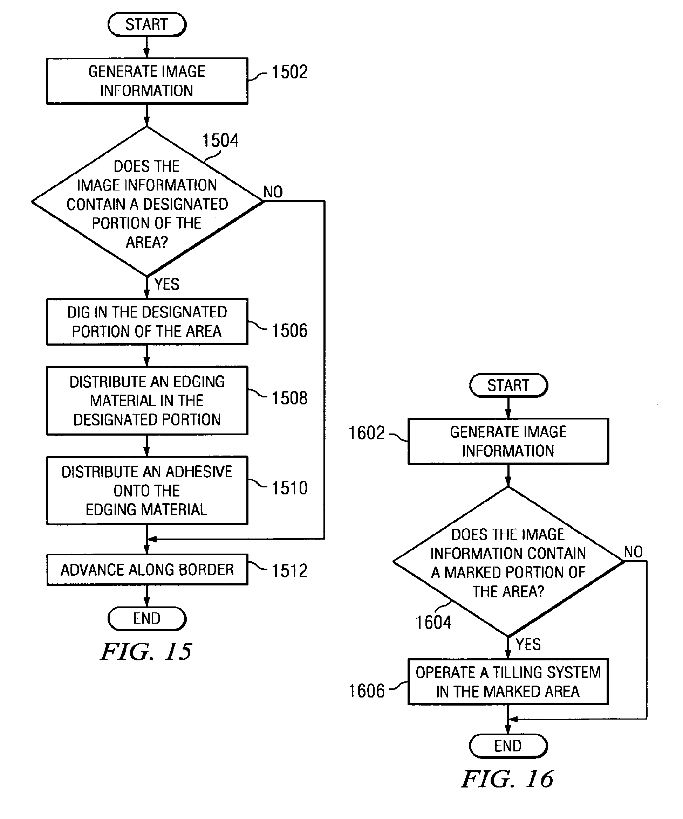

Turning now to Figure 15, a flowchart of a process for digging in a designated portion of an area is depicted in accordance with an illustrative embodiment. The process may be implemented in area management environment 200 using area management vehicle 202.

The process begins by generating image information (operation 1502). The image information may be generated using a camera system, such as camera system 214 in Figure 2. The process then determines whether the image information contains a designated portion of the area (operation 1504). The designated area may be an example of a designated portion, such as designated portion 258. A portion of the area may be designated using spray paint, dye, or a particular amount of dead growth. If the image information does not contain a designated portion of the area, the process proceeds to operation 1512. If the process determines that the image information contains a designated portion of the area at operation 1504, the process digs in the designated portion of the area (operation 1506).

The process then distributes an edging material in the designated portion (operation 1508). The edging material may be a substance that substantially prevents growth on one side of the edging material from expanding to the other side of the edging material. The process then distributes an adhesive onto the edging material (operation 1510). The adhesive bonds the portions of the edging material together such that the edging material becomes a barrier. The barrier substantially prevents plant growth from crossing from one side of the edging material to the other side of the edging material. The process then advances along border (operation 1512). The process terminates thereafter.

Turning now to Figure 16, a flowchart of a process for tilling in a marked area is depicted in accordance with an illustrative embodiment. The process may be implemented in area management environment 200 using area management vehicle 202 in Figure 2.

The process begins by generating image information (operation 1602). The image information may be generated using a camera system, such as camera system 214 in Figure 2. The process then determines whether the image information contains a marked portion of the area (operation 1604). The marked portion of the area may comprise a portion that is marked with spray paint, dye or radio frequency identifier tags. If the process determines that the image information contains a marked portion of the area, the process operates a tilling system in the marked area (operation 1606). The process terminates thereafter. The process may operate the tilling system for a predetermined period of time or until the marked portion may no longer be detected in the image information. If the process determines that the image information does not contain a marked portion of the area at operation 1604, the process terminates.

The description of the different advantageous embodiments has been presented for purposes of illustration and description, and is not intended to be exhaustive or limited to the embodiments in the form disclosed. Many modifications and variations will be apparent to those of ordinary skill in the art. Further, different embodiments may provide different advantages as compared to other embodiments. The embodiment or embodiments selected are chosen and described in order to best explain the principles of the invention, the practical application, and to enable others of ordinary skill in the art to understand the invention for various embodiments with various modifications as are suited to the particular use contemplated.

## Claims

1. An apparatus comprising a mobile platform (108) configured to move through an area management environment (100); a camera system associated with the mobile platform (108), wherein the camera system is configured to create image information; further including a distribution system (222) associated with the mobile platform (108), wherein the distribution system (222) is configured to distribute a resource; and a processor unit (304) associated with the mobile platform (108), wherein the processor unit (304) is configured to run an area management process to receive the image information from the camera system, identify a number of inconsistencies in a number of portions of the area using the image information, and control a distribution of the resource by the distribution system (222) in the number of portions of the area in which an inconsistency in the number of inconsistencies is identified, **characterized in that** the area management environment (100) including a lawn (132) and **in that** the mobile platform (108) detects the presence of radio frequency identifier tags buried within in the lawn (132) to form a border for operation of mobile platform (108) in a direction that does not move mobile platform (108) closer to the border.

2. The apparatus according to claim 1, **characterized in that** the distribution of the resource by the distribution system reduces the inconsistency in the number of portions.

3. The apparatus according to claim 1 or 2, **characterized in that** the mobile platform comprises a mobility system, and wherein the area management process causes the mobility system to move the mobile platform through the area using a propulsion system.

4. The apparatus according to one of the previous claims, **characterized in that** the inconsistency is a number of weeds and the resource is a weed remover.

5. The apparatus according to one of the previous claims, **characterized by** a grade sensor associated with the mobile platform, wherein the grade sensor is configured to identify a change in elevation over the area, and wherein the inconsistency is the change in elevation in the number of portions of the area that falls outside of a threshold for the change in elevation for the area.

6. The apparatus according to claim 5, **characterized in that** the processor unit is configured to run the area management process to control the distribution of the resource by the distribution system further comprises the processor unit being configured to run the area management process to alter the change in elevation to fall within the threshold for the change in elevation for the area using the distribution system, wherein the resource preferably is soil.

7. The apparatus according to claim 1, **characterized in that** the resource is seed and the inconsistency is a level of growth of a plant that does not meet a specified growth level for the plant for the area.

8. The apparatus according to claim 1, **characterized in that** the inconsistency is a marked area and the resource is seed, and further comprises a tiller system, wherein the processing unit is further configured to run the area management process to operate the tiller system in the marked area.

9. The apparatus according to claim 8, **characterized in that** the marked area is at least partially bound with a border, wherein preferably the border comprises at least one of a hose, a plurality of radio frequency identifiers, a wire, a magnetic material, a conductive material, a paint, and a dye and/or wherein the processor unit is configured to run the area management process to operate the tiller system in the marked area prior to distributing the seed.

10. The apparatus according to claim 1, **characterized by** a cutting system associated with the mobile platform configured to trim a number of shrubs by cutting the number of shrubs.

11. The apparatus according to claim 10, **characterized in that** the processor unit is further configured to run the area management process to identify a number of shrubs in the area using the image information, and cause the cutting system to trim the number of shrubs in a number of portions of the area in which the number of shrubs are identified.

12. The apparatus according to claim 1, **characterized by** an edging system associated with the mobile platform configured to trim a plant growth in the number of portions of the area by cutting the plant growth, the processor unit preferably being further configured to run the area management process to identify the plant growth in the number of portions using the image information, and cause the edging system to trim the plant growth along an edge.

13. The according to claim 1, **characterized by** a digging system associated with the mobile platform configured to move a material, the area management process preferably causing the digging system to dig in a designated portion of the area, the area management process preferably causing the distribution system to distribute an edging material in the designated portion after causing the digging system to dig in the designated portion, the area management process preferably causing the distribution system to distribute an adhesive onto the edging material, after causing the distribution system to distribute the edging material, wherein the adhesive causes a first portion of the edging material to bond to a second portion of the edging material.

14. The apparatus according to claim 13, **characterized in that** the edging material further comprises a number of radio frequency identifier tags or a number of magnets and/or a number of wires.

15. A computer program product comprising a computer readable storage medium; a program code, stored on the computer readable storage medium, for generating image information using an camera system associated with a mobile platform (108); program code, stored on the computer readable storage medium, for determining whether a number of inconsistencies is present in a number of portions of the area management environment (100) including a lawn (132) using the image information; and program code, stored on the computer readable storage medium, for causing a distribution system to distribute a resource in the number of portions of the area in which an inconsistency in the number of inconsistencies is identified responsive to the number of inconsistencies being present in the number of portions of the area, **characterized by** the presence of radio frequency identifier tags buried within in the lawn (132) to form a border for operation of mobile platform (108) in a direction that does not move mobile platform (108) closer to the border, the radio frequency identifier tags being detectable by the mobile platform (108).

16. A method for managing an area management environment (100) including a lawn (132), the method **characterized by** the steps of generating image information using an camera system associated with a mobile platform (108); determining whether a number of inconsistencies is present in a number of portions of the area using the image information; and responsive to the number of inconsistencies being present in the number of portions of the area, distributing a resource in a number of portions of the area in which an inconsistency in the number of inconsistencies is identified, **characterized by** the step of the mobile platform (108) detecting the presence of radio frequency identifier tags buried within in the lawn (132) to form a border for operation of mobile platform (108) in a direction that does not move mobile platform (108) closer to the border..

17. The method according to claim 16, wherein distributing the resource reduces the inconsistency in the number of portions.

18. The method according to claim 16 or 17, characterize in that the mobile platform comprises a number of wheels and a propulsion system, and wherein moving the mobile platform through the area further comprises propelling the mobile platform through the area using the propulsion system.

19. The method according to one of the claims 16 to 18, **characterized in** tht the inconsistency is a number of weeds and the resource is a weed remover.

20. The method according to one of the claims 16 to 19, **characterized by** the step of identifying a change in elevation, wherein the inconsistency is the change in elevation that falls outside of a threshold for the change in elevation for the area, wherein distributing the resource preferably further comprises altering the change in elevation to fall within the threshold for the change in elevation for the area and wherein the resource preferably is a soil.

21. The method according to claim 16, **characterized in that** the resource is seed and the inconsistency is a level of growth of a plant that does not meet a specified growth level for the plant for the area.

22. The method according to claim 16, **characterized in that** the inconsistency is a marked area and the resource is seed, and further comprises operating a tiller system in the marked area, wherein the marked area preferably is at least partially bound with a border, the border preferably comprising a hose, the step of operating the tiller system in the marked area preferably being prior to distributing the seed.

23. The method according to claim 16, **characterized by** the steps of identifying a number of shrubs in the area using the image information; and trimming the number of shrubs in a number of portions of the area in which the number of shrubs are identified.

24. The method according to claim 16, **characterized by** the steps of digging in a designated portion of the area; and distributing an edging material in the designated portion, preferably further comprising distributing an adhesive onto the edging material, wherein the adhesive causes a first portion of the edging material to bond to a second portion of the edging material, wherein the edging material preferably further comprises a number of radio frequency identifier tags, a number of magnets and/or a number of wires.

## Patentansprüche

1. Vorrichtung, die eine bewegliche Plattform (108), die konfiguriert ist, sich durch eine Flächenmanagementumgebung (100) zu bewegen; und ein Kamerasystem, das der beweglichen Plattform (108) zugeordnet ist, wobei das Kamerasystem konfiguriert ist, Bildinformationen zu erzeugen, umfasst; die ferner ein Verteilungssystem (222), das der beweglichen Plattform (108) zugeordnet ist, wobei das Verteilungssystem (222) konfiguriert ist, ein Betriebsmittel zu verteilen; und eine Verarbeitungseinheit (304), die der beweglichen Plattform (108) zugeordnet ist, enthält, wobei die Verarbeitungseinheit (304) konfiguriert ist, einen Flächenmanagementprozess ablaufen zu lassen, um die Bildinformationen von dem Kamerasystem zu empfangen, mehrere Inkonsistenzen in mehreren Abschnitten der Fläche unter Verwendung der Bildinformationen zu identifizieren und eine Verteilung der Betriebsmittel durch das Verteilungssystem (222) in den mehreren Abschnitten der Fläche, in der eine Inkonsistenz in den mehreren Inkonsistenzen identifiziert ist, zu steuern, **dadurch gekennzeichnet, dass** die Flächenmanagementumgebung (100) einen Rasen (132) enthält und dass die bewegliche Plattform (108) das Vorhandensein von Hochfrequenzbezeichnerkennzeichen, die in dem Rasen (132) verlegt sind, detektiert, um eine Grenze für den Betrieb der beweglichen Plattform (108) in einer Richtung zu bilden, welche die bewegliche Plattform (108) nicht näher an die Grenze bewegt.

2. Vorrichtung nach Anspruch 1, **dadurch gekennzeichnet, dass** die Verteilung des Betriebsmittels durch das Verteilungssystem die Inkonsistenz in den mehreren Abschnitten verringert.

3. Vorrichtung nach Anspruch 1 oder 2, **dadurch gekennzeichnet, dass** die bewegliche Plattform ein Bewegungssystem umfasst, wobei der Flächenmanagementprozess bewirkt, dass das Bewegungssystem die bewegliche Plattform durch die Fläche unter Verwendung eines Antriebssystems bewegt.

4. Vorrichtung nach einem der vorhergehenden Ansprüche, **dadurch gekennzeichnet, dass** die Inkonsistenz mehrere Unkräuter sind und das Betriebsmittel ein Unkrautentferner ist.

5. Vorrichtung nach einem der vorhergehenden Ansprüche, **gekennzeichnet durch** einen Gradientensensor, welcher der beweglichen Plattform zugeordnet ist, wobei der Gradientensensor konfiguriert ist, eine Änderung in der Höhe über der Fläche zu identifizieren und wobei die Inkonsistenz die Änderung in der Höhe in den mehreren Abschnitten der Fläche ist, die außerhalb eines Schwellenwerts für die Änderung der Höhe für die Fläche fällt.

6. Vorrichtung nach Anspruch 5, **dadurch gekennzeichnet, dass** die Verarbeitungseinheit konfiguriert ist, den Flächenmanagementprozess ablaufen zu lassen, um die Verteilung des Betriebsmittels durch das Verteilungssystem zu steuern, und dass die Verarbeitungseinheit konfiguriert ist, den Flächenmanagementprozess ablaufen zu lassen, um die Änderung in der Höhe zu verändern, so dass sie innerhalb des Schwellenwerts für die Änderung der Höhe für die Fläche fällt, unter Verwendung des Verteilungssystems, wobei das Betriebsmittel vorzugsweise Erde ist.

7. Vorrichtung nach Anspruch 1, **dadurch gekennzeichnet, dass** das Betriebsmittel Saatgut ist und die Inkonsistenz ein Wachstumsgrad einer Pflanze ist, die nicht einem spezifizierten Wachstumsgrad für die Pflanze für die Fläche entspricht.

8. Vorrichtung nach Anspruch 1, **dadurch gekennzeichnet, dass** die Inkonsistenz eine markierte Fläche ist und das Betriebsmittel Saatgut ist, und die ferner ein Bodenfrässystem umfasst, wobei die Verarbeitungseinheit ferner konfiguriert ist, den Flächenmanagementprozess ablaufen zu lassen, um das Bodenfrässystem in der markierten Fläche zu betreiben.

9. Vorrichtung nach Anspruch 8, **dadurch gekennzeichnet, dass** die markierte Fläche wenigstens teilweise mit einer Grenze begrenzt ist, wobei die Grenze vorzugsweise einen Schlauch und/oder mehrere Hochfrequenzbezeichner und/oder einen Draht und/oder ein magnetisches Material und/oder ein leitendes Material und/oder einen Anstrich und/oder einen Farbstoff umfasst und/oder wobei die Verarbeitungseinheit konfiguriert ist, den Flächenmanagementprozess ablaufen zu lassen, um das Bodenfrässystem in der markierten Fläche vor dem Verteilen des Saatguts zu betreiben.

10. Vorrichtung nach Anspruch 1, **gekennzeichnet durch** ein Schneidsystem, das der beweglichen Plattform zugeordnet ist und konfiguriert ist, mehrere Sträucher **durch** Schneiden der mehreren Sträucher zu beschneiden.

11. Vorrichtung nach Anspruch 10, **dadurch gekennzeichnet, dass** die Verarbeitungseinheit ferner konfiguriert ist, den Flächenmanagementprozess ablaufen zu lassen, um mehrere Sträucher in der Fläche unter Verwendung der Bildinformationen zu identifizieren und zu bewirken, dass das Schneidsystem die mehreren Sträucher in mehreren Abschnitten der Fläche, in denen die mehreren Sträucher identifiziert sind, beschneidet.

12. Vorrichtung nach Anspruch 1, **gekennzeichnet durch** ein Kantenbeschneidungssystem, das der beweglichen Plattform zugeordnet ist und konfiguriert ist, einen Pflanzenwuchs in den mehreren Abschnitten der Fläche **durch** Schneiden des Pflanzenwuchses zu beschneiden, wobei die Verarbeitungseinheit vorzugsweise ferner konfiguriert ist, den Flächenmanagementprozess ablaufen zu lassen, um den Pflanzenwuchs in den mehreren Abschnitten unter Verwendung der Bildinformationen zu identifizieren und zu bewirken, dass das Kantenbeschneidungssystem den Pflanzenwuchs entlang einer Kante beschneidet.

13. Vorrichtung nach Anspruch 1, **gekennzeichnet durch** ein Grabungssystem, das der beweglichen Plattform zugeordnet ist und konfiguriert ist, ein Material zu bewegen, wobei der Flächenmanagementprozess vorzugsweise bewirkt, dass das Grabungssystem in einem bestimmten Abschnitt der Fläche gräbt, wobei der Flächenmanagementprozess vorzugsweise bewirkt, dass das Verteilungssystem ein Kantenbeschneidungsmaterial in dem bestimmten Abschnitt verteilt, nachdem er bewirkt hat, dass das Grabungssystem in dem bestimmten Abschnitt gräbt, wobei der Flächenmanagementprozess vorzugsweise bewirkt, dass das Verteilungssystem ein Haftmittel auf das Kantenbeschneidungsmaterial verteilt, nachdem er bewirkt hat, dass das Verteilungssystem das Kantenbeschneidungsmaterial verteilt, wobei das Haftmittel bewirkt, dass ein erster Abschnitt des Kantenbeschneidungsmaterials mit einen zweiten Abschnitt des Kantenbeschneidungsmaterial verbunden wird.

14. Vorrichtung nach Anspruch 13, **dadurch gekennzeichnet, dass** das Kantenbeschneidungsmaterial ferner mehrere Hochfrequenzbezeichnerkennzeichen oder mehrere Magneten und/oder mehrere Drähte umfasst.

15. Computerprogrammprodukt, das ein computerlesbares Speichermedium; einen Programmcode, der auf dem computerlesbaren Speichermedium gespeichert ist, zum Erzeugen von Bildinformationen unter Verwendung eines Kamerasystems, das der beweglichen Plattform (108) zugeordnet ist; Programmcode, der auf dem computerlesbaren Speichermedium gespeichert ist, zum Bestimmen unter Verwendung der Bildinformationen, ob mehrere Inkonsistenzen in mehreren Abschnitten der Flächenmanagementumgebung (100), die einen Rasen (132) enthält, vorhanden sind; und Programmcode, der auf dem computerlesbaren Speichermedium gespeichert ist, zum Bewirken, dass ein Verteilungssystem ein Betriebsmittel in den mehreren Abschnitten in der Fläche verteilt, in denen eine Inkonsistenz in den mehreren Inkonsistenzen identifiziert ist, in Reaktion auf mehrere Inkonsistenzen, die in den mehreren Abschnitten der Fläche vorhanden sind, umfasst,
**gekennzeichnet durch** das Vorhandensein von Hochfrequenzbezeichnerkennzeichen, die innerhalb des Rasens (132) verlegt sind, um eine Grenze für den Betrieb der beweglichen Plattform (108) in einer Richtung zu bilden, welche die bewegliche Plattform (108) nicht näher an die Grenze bewegt, wobei die Hochfrequenzbezeichnerkennzeichen **durch** die bewegliche Plattform (108) detektierbar sind.

16. Verfahren zum Verwalten einer Flächenmanagementumgebung (100), die einen Rasen (132) enthält, wobei das Verfahren **gekennzeichnet ist durch** die Schritte des Erzeugens von Bildinformationen unter Verwendung eines Kamerasystems, das der beweglichen Plattform (108) zugeordnet ist; des Bestimmens unter Verwendung der Bildinformationen, ob mehrere Inkonsistenzen in mehreren Abschnitten der Fläche vorhanden sind; und in Reaktion auf die mehreren Inkonsistenzen, die in den mehreren Abschnitten der Fläche vorhanden sind, des Verteilens eines Betriebsmittels in mehreren Abschnitten der Fläche, in denen eine Inkonsistenz in mehreren Inkonsistenzen identifiziert ist, **gekennzeichnet durch** den Schritt, in dem die bewegliche Plattform (108) das Vorhandensein von Hochfrequenzbezeichnerkennzeichen detektiert, die in dem Rasen (132) verlegt sind, um eine Grenze für den Betrieb der beweglichen Plattform (108) in einer Richtung zu bilden, welche die bewegliche Plattform (108) nicht näher an die Grenze bewegt.

17. Verfahren nach Anspruch 16, wobei das Verteilen des Betriebsmittels die Inkonsistenz in den mehreren Abschnitten verringert.

18. Verfahren nach Anspruch 16 oder 17, **dadurch gekennzeichnet, dass** die bewegliche Plattform mehrere Räder und ein Antriebssystem umfasst, und wobei das Bewegen der beweglichen Plattform durch die Fläche ferner das Vorantreiben der beweglichen Plattform durch die Fläche unter Verwendung des Antriebssystems umfasst.

19. Verfahren nach einem der Ansprüche 16 bis 18, **dadurch gekennzeichnet, dass** die Inkonsistenz mehrere Unkräuter sind und das Betriebsmittel ein Unkrautentferner ist.

20. Verfahren nach einem der Ansprüche 16 bis 19, **gekennzeichnet durch** den Schritt des Identifizierens einer Änderung der Höhe, wobei die Inkonsistenz die Änderung der Höhe ist, die außerhalb eines Schwellenwerts für die Änderung der Höhe für die Fläche fällt, wobei das Verteilen des Betriebsmittels vorzugsweise ferner das Verändern die Änderung der Höhe umfasst, damit sie innerhalb des Schwellenwerts für die Änderung der Höhe für die Fläche liegt, und wobei das Betriebsmittel Erde ist.

21. Verfahren nach Anspruch 16, **dadurch gekennzeichnet, dass** das Betriebsmittel Saatgut ist und die Inkonsistenz ein Wachstumsgrad einer Pflanze ist, der nicht einem spezifizierten Wachstumsgrad für die Pflanze für die Fläche entspricht.

22. Verfahren nach Anspruch 16, **dadurch gekennzeichnet, dass** die Inkonsistenz eine markierte Fläche ist und das Betriebsmittel Saatgut ist, und das ferner das Betreiben eines Bodenfrässystem in der markierten Fläche umfasst, wobei die markierte Fläche vorzugsweise wenigstens teilweise durch eine Grenze begrenzt ist, wobei die Grenze vorzugsweise einen Schlauch umfasst, wobei der Schritt des Betreibens des Bodenfrässystems in der markierten Fläche vorzugsweise vor dem Verteilen des Saatguts stattfindet.

23. Verfahren nach Anspruch 16, **gekennzeichnet durch** die Schritte des Identifizierens mehrerer Sträucher in der Fläche unter Verwendung der Bildinformationen; und des Beschneidens der mehreren Sträucher in mehreren Abschnitten der Fläche, in der die mehreren Sträucher identifiziert sind.

24. Verfahren nach Anspruch 16, **gekennzeichnet durch** die Schritte des Grabens in einem bestimmten Abschnitt der Fläche; und des Verteilens eines Kantenbeschneidungsmaterials in dem bestimmten Abschnitt, wobei das Verfahren vorzugsweise ferner das Verteilen eines Haftmittels auf das Kantenbeschneidungsmaterial umfasst, wobei das Haftmittel bewirkt, dass sich ein erster Abschnitt des Kantenbeschneidungsmaterials mit einem zweiten Abschnitt des Kantenbeschneidungsmaterials verbindet, wobei das Kantenbeschneidungsmaterial vorzugsweise ferner mehrere Hochfrequenzbezeichnerkennzeichen, mehrere Magneten und/oder mehrere Drähte umfasst.

## Revendications

1. Appareil comprenant une plate-forme mobile (108) configurée de façon à se déplacer à travers un environnement de gestion de zone (100) ; un système avec caméra associé à la plate-forme mobile (108), ce système avec caméra étant configuré de façon à créer des images d'information ; comprenant en outre un système de distribution (222) associé à la plate-forme mobile (108), ce système de distribution (222) étant configuré de façon à distribuer une ressource ; et un processeur (304) associé à la plate-forme mobile (108), ce processeur (304) étant configuré de façon à exécuter un processus de gestion de zone afin de recevoir les images d'information du système avec caméra, d'identifier un certain nombre d'incohérences dans un certain nombre de parties de la zone en utilisant les images d'information, et de commander une distribution de la ressource par le système de distribution (222) dans le certain nombre de parties de la zone dans lesquelles une incohérence parmi le certain nombre d'incohérences est identifiée, **caractérisé en ce que** l'environnement de gestion de zone (100) comprend une pelouse (132) et **en ce que** la plate-forme mobile (108) détecte la présence d'étiquettes d'identification par radiofréquence enterrées à l'intérieur dans la pelouse (132) pour former un bord limite pour l'utilisation de la plate-forme mobile (108) dans une direction qui ne déplace pas la plate-forme mobile (108) plus près du bord limite.

2. Appareil selon la revendication 1, **caractérisé en ce que** la distribution de la ressource par le système de distribution réduit l'incohérence dans le certain nombre de parties.

3. Appareil selon la revendication 1 ou 2, **caractérisé en ce que** la plate-forme mobile comprend un système de mobilité, et dans lequel le processus de gestion de la zone fait le système de mobilité déplacer la plate-forme mobile à travers la zone en utilisant un système de propulsion.

4. Appareil selon l'une quelconque des revendications précédentes, **caractérisé en ce que** l'incohérence est un certain nombre de mauvaises herbes et la ressource et un desherbeur.

5. Appareil selon l'une quelconque des revendications précédentes, **caractérisé par** un capteur de modelé associé à la plate-forme mobile, ce capteur de modelé étant configuré de façon à identifier un changement d'élévation sur la zone, et l'incohérence étant le changement d'élévation dans le certain nombre de parties de la zone qui se situe au-delà d'un seuil pour le changement d'élévation pour la zone.

6. Appareil selon la revendication 5, **caractérisé en ce que** le processeur est configuré de façon à exécuter le processus de gestion de la zone afin de commander la distribution de la ressource par le système de distribution et **en ce que** le processeur est configuré de façon à exécuter le processus de gestion de la zone pour modifier le changement d'élévation pour qu'il se situe dans les limites du seuil pour le changement d'élévation pour la zone en utilisant le système de distribution, la ressource étant de préférence de la terre.

7. Appareil selon la revendication 1, **caractérisé en ce que** la ressource consiste en des semences et l'incohérence est un niveau de croissance d'une plante qui ne correspond pas à un niveau de croissance spécifié pour cette plante pour la zone.

8. Appareil selon la revendication 1, **caractérisé en ce que** l'incohérence est une zone marquée et la ressource consiste en des semences, et comprenant en outre un système cultivateur, le processeur étant configuré en outre de façon à exécuter le processus de gestion de la zone pour utiliser le système cultivateur dans la zone marquée.

9. Appareil selon la revendication 8, **caractérisé en ce que** la zone marquée est limitée au moins partiellement au moyen d'un bord limite, ce bord limite comprenant de préférence au moins soit un tuyau, soit une pluralité d'identificateurs par radiofréquence, soit un fil, soit un matériau magnétique, soit un matériau conducteur, soit une peinture, soit un colorant, et/ou dans lequel le processeur est configuré de façon à exécuter un processus de gestion de zone pour utiliser le système cultivateur dans la zone marquée avant de distribuer les semences.

10. Appareil selon la revendication 1, **caractérisé par** un système de coupe associé à la plate-forme mobile, configuré de façon à tailler un certain nombre d'arbustes en coupant ce certain nombre d'arbustes.

11. Appareil selon la revendication 10, **caractérisé en ce que** le processeur est configuré en outre de façon à exécuter le processus de gestion de la zone afin d'identifier un certain nombre d'arbustes dans la zone en utilisant les images d'information, et de faire tailler par le système de coupe le certain nombre d'arbustes dans un certain nombre de parties de la zone dans lesquelles le certain nombre d'arbustes sont identifiés.

12. Appareil selon la revendication 1, **caractérisé par** un système coupe-bordure associé à la plate-forme mobile, configuré de façon à tailler la croissance de plantes croissant dans le certain nombre de parties de la zone en coupant la croissance des plantes, le processeur étant de préférence configuré en outre de façon à exécuter le processus de gestion de la zone afin d'identifier la croissance des plantes dans le certain nombre de parties en utilisant les images d'information, et de faire tailler par le système coupe-bordure la croissance de plantes le long d'une bordure.

13. Appareil selon la revendication 1, **caractérisé par** un système de bêchage associé à la plate-forme mobile, configuré de façon à déplacer un matériau, le processus de gestion de la zone faisant de préférence bêcher le système de bêchage dans une partie désignée de la zone, le processus de gestion de la zone faisant de préférence distribuer par le système de distribution un matériau de bordure dans la partie désignée après avoir fait bêcher le système de bêchage dans la partie désignée, le processus de gestion de la zone faisant de préférence distribuer par le système de distribution un adhésif sur le matériau de bordure, après avoir fait distribuer le matériau de bordure par le système de distribution, cet adhésif faisant une première partie du matériau de bordure coller à une deuxième partie du matériau de bordure.

14. Appareil selon la revendication 13, **caractérisé en ce que** le matériau de bordure comprend en outre un certain nombre d'étiquettes d'identification par radiofréquence ou un certain nombre d'aimants et/ou un certain nombre de fils.

15. Produit programme informatique comprenant un support de stockage lisible par ordinateur ; un code de programme, stocké sur le support de stockage lisible par ordinateur, pour générer des images d'information en utilisant un système avec caméra associé à une plate-forme mobile (108) ; un code de programme, stocké sur le support de stockage lisible par ordinateur, pour déterminer si un certain nombre d'incohérences sont présentes dans un certain nombre de parties de l'environnement de gestion de zone (100) comprenant une pelouse (132) en utilisant les images d'information ; et un code de programme, stocké sur le support de stockage lisible par ordinateur, pour faire distribuer une ressource par un système de distribution dans le certain nombre de parties de la zone dans lesquelles une incohérence parmi le certain nombre d'incohérences est identifiée en réponse au certain nombre d'incohérences étant présentes dans le certain nombre de parties de la zone,
**caractérisé par** la présence d'étiquettes d'identification par radiofréquence enterrées à l'intérieur dans la pelouse (132) pour former un bord limite pour l'utilisation de la plate-forme mobile (108) dans une direction que ne déplace pas la plate-forme mobile (108) plus près du bord limite, ces étiquettes d'identification par radiofréquence étant détectables par la plate-forme mobile (108).

16. Procédé pour gérer un environnement de gestion de zone (100) comprenant une pelouse (132), ce procédé étant **caractérisé par** les étapes consistant à générer des images d'information en utilisant un système avec caméra associé à une plate-forme mobile (108) ; à déterminer si un certain nombre d'incohérences sont présentes dans un certain nombre de parties de la zone en utilisant les images d'information ; et, en réponse au certain nombre d'incohérences étant présentes dans le certain nombre de parties de la zone, à distribuer une ressource dans un certain nombre de parties de la zone dans lesquelles une incohérence parmi le certain nombre d'incohérences est identifiée, **caractérisé par** l'étape consistant en la détection par la plate-forme mobile (108) de la présence d'étiquettes d'identification par radiofréquence enterrées à l'intérieur dans la pelouse (132) pour former un bord limite pour l'utilisation de la plate-forme mobile (108) dans une direction qui ne déplace pas la plate-forme mobile (108) plus près de ce bord limite.

17. Procédé selon la revendication 16, dans lequel la distribution de la ressource réduit l'incohérence dans le certain nombre de parties.

18. Procédé selon la revendication 16 ou 17, **caractérisé en ce que** la plate-forme mobile comporte un certain nombre de roues et un système de propulsion, et dans lequel le déplacement de la plate-forme mobile à travers la zone comprend en outre la propulsion de la plate-forme mobile à travers la zone au moyen du système de propulsion.

19. Procédé selon une des revendications 16 à 18, **caractérisé en ce que** l'incohérence est un certain nombre de mauvaises herbes et la ressource est un desherbeur.

20. Procédé selon une des revendications 16 à 19, **caractérisé par** l'étape d'identification d'un changement d'élévation, dans lequel l'incohérence est le changement d'élévation qui se situe au-delà d'un seuil pour le changement d'élévation pour la zone, dans lequel la distribution de la ressource comprend en outre, de préférence, la modification du changement d'élévation pour qu'il se situe dans les limites du seuil pour le changement d'élévation pour la zone et dans lequel la ressource est de préférence une terre.

21. Procédé selon la revendication 16, **caractérisé en ce que** la ressource consiste en des semences et l'incohérence est un niveau de croissance d'une plante qui ne correspond pas à un niveau de croissance spécifié pour cette plante pour la zone.

22. Procédé selon la revendication 16, **caractérisé en ce que** l'incohérence est une zone marquée et la ressource consiste en des semences, et comprenant en outre l'utilisation d'un système cultivateur dans la zone marquée, dans lequel la zone marquée est de préférence au moins partiellement limitée au moyen d'un bord limite, ce bord limite comprenant de préférence un tuyau, l'étape d'utilisation du système cultivateur dans la zone marquée étant de préférence préalable à la distribution des semences.

23. Procédé selon la revendication 16, **caractérisé par** les étapes d'identification d'un certain nombre d'arbustes dans la zone en utilisant les images d'information ; et de taille du certain nombre d'arbustes dans un certain nombre de parties de la zone dans lesquelles le certain nombre d'arbustes sont identifiés.

24. Procédé selon la revendication 16, **caractérisé par** les étapes de bêchage dans une partie désignée de la zone ; et de distribution d'un matériau de bordure dans la partie désignée, comprenant en outre, de préférence, la distribution d'un adhésif sur le matériau de bordure, cet adhésif faisant coller une première partie du matériau de bordure à une deuxième partie du matériau de bordure, le matériau de bordure comprenant en outre, de préférence, un certain nombre d'étiquettes d'identification par radiofréquence, un certain nombre d'aimants et/ou un certain nombre de fils.
